# EUROPEAN PATENT APPLICATION

(11) **EP 4 080 533 A1**
(43) Date of publication of application: **26.10.2022**
(21) Application number: 20902901.6
(22) Date of filing: 17.12.2020
(51) Int. Cl.: H01G 11/62, H01G 11/64, H01M 10/052, H01M 10/0567, H01M 10/0568, H01M 6/16

(54) **NON-AQUEOUS ELECTROLYTE SOLUTION AND ENERGY DEVICE**

(30) Priority: 17.12.2019 JP 2019226955
(71) Applicant: Mitsubishi Chemical Corporation, Chiyoda-ku Tokyo 100-8251 (JP); MU Ionic Solutions Corporation, Tokyo 100-8251 (JP)
(72) Inventor: SAWA, Shuhei, Tokyo 100-8251 (JP); KAWAKAMI, Daisuke, Tokyo 100-8251 (JP); NISHIO, Koichi, Tokyo 100-8251 (JP)
(74) Representative: Hoffmann Eitle
(86) International application number: PCT/JP2020/047297
(87) International publication number: WO 2021/125301

(57) **Abstract**

Provided are: a non-aqueous electrolyte solution that can suppress the room-temperature and/or low-temperature discharge resistance growth of an energy device; and an energy device that includes the non-aqueous electrolyte solution. A non-aqueous electrolyte solution for an energy device that comprises a positive electrode and a negative electrode. The non-aqueous electrolyte solution is characterized by containing an electrolyte, a non-aqueous solvent, a linear sulfonic acid ester, and at least one compound selected from the group that consists of fluorosulfonates, monofluorophosphates, difluorophosphates, imide salts, and oxalates, the mass ratio of the amount of the linear sulfonic acid ester to the amount of the at least one compound selected from the group that consists of fluorosulfonates, monofluorophosphates, difluorophosphates, imide salts, and oxalates being within a specific range.

## Description

### TECHNICAL FIELD

The present invention relates to a non-aqueous electrolytic solution and an energy device.

### BACKGROUND ART

Energy devices such as lithium primary batteries, lithium secondary batteries, electric double layer capacitors, and lithium ion capacitors are put to practical uses for a wide range of applications such as power sources for so-called consumer-use small devices such as cell phones and notebook PCs and in-vehicle power sources for driving electric vehicles. However, in recent years, demands for higher performance in energy devices have become increasingly high.

Among them, many studies have been conducted in the fields of active materials for positive electrodes or negative electrodes and additives for non-aqueous electrolytic solutions as means of improving the battery characteristics of non-aqueous electrolytic solution batteries.

For example, Patent Document 1 discloses that a technique in which an improvement in cycle characteristics can be achieved by suppressing decomposition of an electrolytic solution by generating a coating film on the surface of a carbon electrode by a reaction of an alkyl alkane sulfonate with a carbon electrode by using an electrolytic solution for lithium secondary batteries containing an alkyl alkane sulfonate having from 1 to 6 carbon atoms.

Patent Document 2 discloses a technique for providing a non-aqueous electrolytic solution secondary battery containing a non-aqueous electrolytic solution containing LiPF₆ and a fluorosulfonate, wherein, by setting molar content of FSO₃ to molar content of PF₆ to from 0.001 to 1.2, the initial charge capacity, the input/output characteristics, and the impedance characteristics are improved, and not only the initial battery characteristics and durability, but also high input/output characteristics and impedance characteristics are maintained after endurance.

Patent Document 3 discloses a technique for providing a non-aqueous electrolytic solution secondary battery with excellent low-temperature discharge characteristics and suppressed degradation of repeated charge/discharge characteristics of the battery by using an electrolytic solution containing a vinylene carbonate, a difluorophosphate, and the like.

Patent Document 4 discloses a technique for providing a non-aqueous electrolytic solution secondary battery using an electrolytic solution containing a boron-containing compound and a cyclic sulfonate ester, wherein, by setting the content of the boron-containing compound to from 0.1 to 2.0% by mass, the charge/discharge efficiency is high.

### PRIOR ART DOCUMENTS

### PATENT DOCUMENTS

Patent Document 1 Japanese Unexamined Patent Application Publication No. H09-245834
Patent Document 2 Japanese Unexamined Patent Application Publication No. 2011-187440
Patent Document 3 Japanese Unexamined Patent Application Publication No. 2007-141830
Patent Document 4 Japanese Unexamined Patent Application Publication No. 2012-243461

### SUMMARY OF THE INVENTION

### PROBLEMS TO BE SOLVED BY THE INVENTION

In recent years, the capacity of lithium batteries for power supply for in-vehicle use in electric vehicles, power supply for cell phones such as smart phones, and the like has become increasingly high, and the ratio of empty space in the battery has become smaller than before. Accordingly, there is a growing demand for suppression of the rate of increase in normal temperature and low temperature discharge resistance, especially when durability tests such as high temperature storage tests are conducted.

In view of the above, the present invention aims at providing a non-aqueous electrolytic solution capable of suppressing the normal temperature and/or low temperature discharge resistance increase rate of an energy device. The present invention aims at providing an energy device in which the normal temperature and/or low temperature discharge resistance increase rate is suppressed.

### MEANS FOR SOLVING THE PROBLEMS

As a result of intensive study to solve the above-described problems, the present inventor found that by using a non-aqueous electrolytic solution containing a chain sulfonate ester and at least one compound selected from the group consisting of a fluorosulfonate, a monofluorophosphate, a difluorophosphate, an imide salt, and an oxalate and containing the chain sulfonate ester in a specific ratio to the compound, suppression of the discharge resistance increase rate of an energy device at normal temperature and low temperature can be realized, thereby arriving at the present invention. The present invention provides the following specific aspects, and the like.
[1] A non-aqueous electrolytic solution for an energy device including a positive electrode and a negative electrode, wherein
   the non-aqueous electrolytic solution contains an electrolyte and a non-aqueous solvent, and further contains
   a chain sulfonate ester and at least one fluorophosphate selected from a monofluorophosphate and a difluorophosphate, and wherein the mass ratio of the content of the chain sulfonate ester to the content of the fluorophosphate is from 10/90 to 82/18.
[2] A non-aqueous electrolytic solution for an energy device including a positive electrode and a negative electrode, wherein
   the non-aqueous electrolytic solution contains an electrolyte and a non-aqueous solvent, and further contains
   (A) a chain sulfonate ester, and at least one compound selected from the group consisting of a fluorosulfonate, an imide salt, and an oxalate, wherein
   (B) the total content of the at least one compound selected from the group consisting of a fluorosulfonate, an imide salt, and an oxalate is from 1.0 × 10⁻³% by mass to 7% by mass in 100% by mass of the non-aqueous electrolytic solution, and wherein
   (C) the mass ratio of the content of the at least one compound selected from the group consisting of a fluorosulfonate, an imide salt, and an oxalate to the content of the chain sulfonate ester is from 10/90 to 99.99/0.01.
[3] The non-aqueous electrolytic solution according to [1] or [2], wherein the chain sulfonate ester is a compound represented by Formula (1). 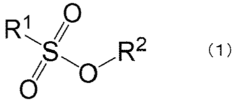 (In Formula (1), R¹ represents a hydrocarbon group having from 1 to 5 carbon atoms optionally containing a substituent, and R² represents a hydrocarbon group having from 1 to 10 carbon atoms optionally containing a substituent.)
[4] The non-aqueous electrolytic solution according to any one of [1] to [3], wherein the non-aqueous electrolytic solution further contains at least one compound selected from the group consisting of a cyclic carbonate having a carbon-carbon unsaturated bond and a fluorine-containing cyclic carbonate.
[5] An energy device comprising a negative electrode, a positive electrode, and a non-aqueous electrolytic solution according to any one of [1] to [4].
[6] The energy device according to [5], wherein the positive electrode contains a positive electrode active material, and the positive electrode active material is a lithium transition metal composite oxide represented by Composition Formula (14).

   Liₐ₁Ni_{b1}Co_{c1}M_{d1}O₂ ··· (14)

   (In Formula (14), a1, b1, c1, and d1 are numbers satisfying 0.90 ≤ a1 ≤ 1.10, 0.50 ≤ b1 ≤ 0.98, 0.01 ≤ c1 < 0.50, and 0.01 ≤ d1 < 0.50, respectively, and b1 + c1 + d1 = 1 is satisfied. M represents at least one element selected from the group consisting of Mn, Al, Mg, Zr, Fe, Ti, and Er.)

### EFFECT OF THE INVENTION

According to the present invention, a non-aqueous electrolytic solution capable of suppressing the normal temperature and/or low temperature discharge resistance increase rate of an energy device can be provied. By using such a non-aqueous electrolytic solution, an energy device in which the normal temperature and/or low temperature discharge resistance increase rate is suppressed can be provided.

### DETAILED DESCRIPTION OF THE INVENTION

Embodiments of the present invention will be described in detail below. The following embodiments are examples (representative examples) of the present invention, and the present invention is not limited thereto. The present invention may be carried out with any modifications within the scope not deviating from the gist thereof.

### < 1. Non-aqueous Electrolytic Solution >

As described below, the non-aqueous electrolytic solution of one embodiment of the present invention contains a chain sulfonate ester and at least one compound selected from the group consisting of a fluorosulfonate, a monofluorophosphate, a difluorophosphate, an imide salt, and an oxalate, and contains the chain sulfonate ester in a specific ratio to the compound.

In the past, attempts have been made to improve energy device characteristics by using chain sulfonate esters. For example, Patent Document 1 refers to the fact that an alkyl alkane sulfonate produces a coating film on the surface of a carbon electrode, which inhibits decomposition of an electrolytic solution. However, a coating film produced here is highly soluble in an electrolytic solution, and the coating film may dissolve into the electrolytic solution and disappear during a durability test such as a high temperature storage test. As a result, side reactions of the electrolytic solution on the negative electrode during the durability test cannot be suppressed, and therefore there is room for improvement in the discharge resistance maintenance rate after the durability test.

On the other hand, at least one compound selected from the group consisting of a fluorosulfonate, a monofluorophosphate, a difluorophosphate, an imide salt, and an oxalate partially dissociates in the electrolytic solution to generate an anion component, and the anion acts on the positive electrode to exhibit a protective effect. However, since these compounds are consumed by side reactions on the positive electrode at the same time, these compounds can no longer provide a desired effect after the durability test. Since the fluorosulfonate, the monofluorophosphate, the difluorophosphate, the imide salt, and the oxalate contain oxygen-mediated double bonds, based on the molecular orbital theory, it is thought that these compounds cause reduction side reactions on the negative electrode due to their increased electron acceptability, which inhibits formation of coating film. As a result, there is room for improvement in the discharge resistance maintenance rate after a durability test.

The present inventor has found that the above-described problem can be solved by adding a chain sulfonate ester to a non-aqueous electrolytic solution and mixing at least one compound selected from the group consisting of a fluorosulfonate, a monofluorophosphate, a difluorophosphate, an imide salt, and an oxalate into the non-aqueous electrolytic solution in a specific ratio to the chain sulfonate ester.

A chain sulfonate ester generates an anion radical upon reduction, and the anion radical immediately causes an addition reaction to an oxygen-mediated double bond portion of at least one compound selected from the group consisting of a fluorosulfonate, a monofluorophosphate, a difluorophosphate, an imide salt, and an oxalate. A composite produced by this has a low solubility and can exist as a stable coating film on a negative electrode, thus strengthening a protective function on the negative electrode. Furthermore, even when a small amount of the composite (composite coating film) is eluted, a component of the composite has a strong and stable effect on the positive electrode, and a protective effect on the positive electrode is also strengthened. Therefore, normal temperature and/or low temperature discharge resistance increase rate can be suppressed. When at least one compound selected from the group consisting of a fluorosulfonate, a monofluorophosphate, a difluorophosphate, an imide salt, and an oxalate is too small with respect to a chain sulfonate ester, generation of unstable coating film derived from the chain sulfonate ester is increased. Therefore, a chain sulfonate ester and at least one compound selected from the group consisting of a fluorosulfonate, a monofluorophosphate, a difluorophosphate, an imide salt, and an oxalate need to be contained in a specific ratio.

Since a cyclic sulfonate ester is more easily reduced than a chain sulfonate ester, an unstable coating film-forming reaction by itself is more likely to proceed. Since a cyclic structure has low steric flexibility, an addition reaction with at least one compound selected from the group consisting of a fluorosulfonate, a monofluorophosphate, a difluorophosphate, an imide salt, and an oxalate is less likely to occur compared to a chain sulfonate ester with high flexibility. Accordingly, composite coating film formation is also less likely to occur, and therefore, a sufficient effect is not achieved.

A method of containing an additive (hereinafter, also referred to as "additive" or "combined additive" for a chain sulfonate ester, a fluorosulfonate, a monofluorophosphate, a difluorophosphate, an imide salt, and an oxalate.), such as a chain sulfonate ester, in a non-aqueous electrolytic solution of one embodiment of the present invention is not particularly limited. Examples of the method include a method of directly adding the following compounds to an electrolytic solution as well as a method of generating a combined additive in an energy device or in an electrolytic solution. Examples of a method of generating a combined additive include a method of adding a compound other than a combined additive, oxidizing or hydrolyzing an energy device component such as an electrolytic solution or the like. Examples of other methods include a method of manufacturing an energy device and applying an electrical load, such as charging or discharging, to generate a combined additive.

When a combined additive is contained in a non-aqueous electrolytic solution and actually used for manufacturing an energy device, the content of the additive in the non-aqueous electrolytic solution is often considerably reduced when the energy device is dismantled and the non-aqueous electrolytic solution is extracted again. Therefore, those in which even a very small amount of a combined additive can be detected in a non-aqueous electrolytic solution extracted from an energy device are considered to be within the scope of the present invention. When a combined additive is actually used as a non-aqueous electrolytic solution for manufacturing an energy device, the combined additive is often detected on a positive electrode, a negative electrode, or a separator, which are other components of the energy device, even when the non-aqueous electrolytic solution extracted again after dismantling the energy device contains only a very small amount of the combined additive. Therefore, when a combined additive is detected in a positive electrode, a negative electrode, or a separator, the total amount of the additive can be assumed to have been contained in the non-aqueous electrolytic solution. Under this assumption, a combined additive is preferably included to be in the range described below.

### < 1-1. Chain Sulfonate Ester >

The chain sulfonate ester in the present embodiment is not particularly restricted as long as the ester has at least one sulfonate ester structure in the molecule.

As a chain sulfonate ester, a compound represented by the following Formula (1) is preferred. 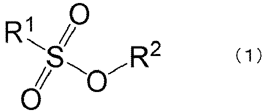 (In Formula (1), R¹ represents a hydrocarbon group having from 1 to 5 carbon atoms optionally containg a substituent, and R² represents a hydrocarbon group having from 1 to 10 carbon atoms optionally containg a substituent.)

R¹ and R² in Formula (1) may be the same group or different groups, and different groups are preferred because a coating film-forming reaction proceeds efficiently and a synergistic effect is more likely to occur when a chain sulfonate ester and one compound selected from the group consisting of a fluorosulfonate, a monofluorophosphate, a difluorophosphate, an imide salt, and an oxalate described below are added together.

R¹ is not particularly restricted as long as R¹ is a hydrocarbon group having from 1 to 5 carbon atoms, and may be substituted with a substituent. Examples of substitution of a hydrocarbon group include halogen atom substitution (halogeno group), and the substitution is preferably fluorine substitution (fluoro group). The hydrocarbon group is particularly preferably a non-substituted aliphatic saturated hydrocarbon group having from 1 to 5 carbon atoms. Examples of the non-substituted aliphatic saturated hydrocarbon group include a linear, branched-chain, or cyclic aliphatic hydrocarbon group, and the non-substituted aliphatic saturated hydrocarbon group is preferably a linear or branched-chain aliphatic hydrocarbon group, and more preferably a linear aliphatic hydrocarbon group.

The number of carbon atoms in the main chain of the hydrocarbon group of R¹ is usually 1 or more, usually 5 or less, preferably 3 or less, and more preferably 2 or less. When the number of carbon atoms in the main chain of the hydrocarbon group represented by R¹ is in this range, the steric hindrance is small and an action on an electrode is more likely to occur, and therefore a synergistic improvement effect with one compound selected from the group consisting of a fluorosulfonate, a monofluorophosphate, a difluorophosphate, an imide salt, and an oxalate described below is more noticeably exhibited.

Examples of R¹ include an alkyl group having from 1 to 5 carbon atoms such as a methyl group, an ethyl group, an *n*-propyl group, an *i*-propyl group, an *n*-butyl group, a sec-butyl group, an *i*-butyl group, a tert-butyl group, an *n*-pentyl group, an isopentyl group, a *sec-*pentyl group, a neopentyl group, a 1-methylbutyl group, a 2-methylbutyl group, a 1,1-dimethylpropyl group, or a 1,2-dimethylpropyl group; an alkenyl group having from 2 to 5 carbon atoms such as a vinyl group, a 1-propenyl group, a 2-propenyl group, an isopropenyl group, a 1-butenyl group, a 2-butenyl group, a 3-butenyl group, a 1-pentenyl group, a 2-pentenyl group, a 3-pentenyl group, or a 4-pentenyl group; and an alkynyl group having from 2 to 5 carbon atoms such as an ethynyl group, a 1-propynyl group, a 2-propynyl group, a 1-butynyl group, a 2-butynyl group, a 3-butynyl group, a 1-pentynyl group, a 2-pentynyl group, a 3-pentynyl group, or a 4-pentynyl group. R¹ is preferably an alkyl group having from 1 to 5 carbon atoms such as a methyl group, an ethyl group, an *n*-propyl group, an *i*-propyl group, an *n*-butyl group, a sec-butyl group, an *i*-butyl group, a tert-butyl group, an *n*-pentyl group, an isopentyl group, a *sec-*pentyl group, a neopentyl group, a 1-methylbutyl group, a 2-methylbutyl group, a 1,1-dimethylpropyl group, or a 1,2-dimethylpropyl group, more preferably a methyl group, an ethyl group, an *n*-propyl group, an *n*-butyl group, or an *n*-pentyl group, more preferably a methyl group or an ethyl group, and especially preferably a methyl group. This is because a protective coating film can be formed on negative electrode efficiently.

A hydrocarbon group substituted with a fluorine atom can also be preferably used as R¹. Preferable examples of a hydrocarbon group substituted with a fluorine atom include a fluoromethyl group, a fluoroethyl group, a difluoroethyl group, a trifluoroethyl group, a perfluoroethyl group, a fluoro-n-propyl group, a difluoro-n-propyl group, a trifluoro-*n*-propyl group, a perfluoro-*n*-propyl group, a fluoro-n-butyl group, a difluoro-n-butyl group, a trifluoro-n-butyl group, and a perfluoro-n-butyl group. This is because the hydrocarbon groups substituted with fluorine atoms above are highly stable compounds.

R² is not particularly restricted as long as R¹ is a hydrocarbon group having from 1 to 10 carbon atoms, and may be substituted with a substituent. Examples of substitution of a hydrocarbon group include halogen atom substitution (halogeno group), and the substitution is preferably fluorine substitution (fluoro group). The hydrocarbon group is preferably a non-substituted aliphatic saturated hydrocarbon group having from 1 to 5 carbon atoms. Examples of the non-substituted aliphatic saturated hydrocarbon group include a linear, branched-chain, or cyclic aliphatic hydrocarbon group, and the non-substituted aliphatic saturated hydrocarbon group is preferably a linear or branched-chain aliphatic hydrocarbon group, and more preferably a linear aliphatic hydrocarbon group.

The number of carbon atoms in the main chain of the hydrocarbon group of R² is usually 1 or more, preferably 2 or more, usually 10 or less, preferably 5 or less, and more preferably 3 or less. When The number of carbon atoms in the main chain of a hydrocarbon group, preferably a saturated hydrocarbon group, represented by R² is in this range, the steric hindrance is small and an action on an electrode is more likely to occur, and therefore a synergistic improvement effect by combining a chain sulfonate ester with one compound selected from the group consisting of a fluorosulfonate, a monofluorophosphate, a difluorophosphate, an imide salt, and an oxalate described below is more noticeably exhibited.

Examples of R² include an alkyl group having from 1 to 10 carbon atoms such as a methyl group, an ethyl group, an *n*-propyl group, an *i*-propyl group, an *n*-butyl group, a *sec*-butyl group, an *i*-butyl group, a *tert*-butyl group, an *n*-pentyl group, an isopentyl group, a *sec-*pentyl group, a neopentyl group, a 1-methylbutyl group, a 2-methylbutyl group, a 1,1-dimethylpropyl group, a 1,2-dimethylpropyl group, an *n*-hexyl group, an *n*-heptyl group, an *n*-octyl group, an *n*-nonyl group, or an *n*-decyl group; an alkenyl group having from 2 to 10 carbon atoms such as a vinyl group, a 1-propenyl group, a 2-propenyl group, an isopropenyl group, a 1-butenyl group, a 2-butenyl group, a 3-butenyl group, a 1-pentenyl group, a 2-pentenyl group, a 3-pentenyl group, a 4-pentenyl group, a 1-hexenyl group, a 1-heptenyl group, a 1-octenyl group, a 1-nonenyl group, or a 1-decenyl group; and an alkynyl group having from 2 to 10 carbon atoms such as an ethynyl group, a 1-propynyl group, a 2-propynyl group, a 1-butynyl group, a 2-butynyl group, a 3-butynyl group, a 1-pentynyl group, a 2-pentynyl group, a 3-pentynyl group, a 4-pentynyl group, a 1-heptinyl group, a 1-octinyl group, a 1-noninyl group, or a 1-decinyl group. R² is preferably an alkyl group having from 1 to 10 carbon atoms such as a methyl group, an ethyl group, an *n*-propyl group, an *i*-propyl group, an *n*-butyl group, a *sec*-butyl group, an *i*-butyl group, a tert-butyl group, an *n*-pentyl group, an isopentyl group, a *sec-*pentyl group, a neopentyl group, a 1-methylbutyl group, a 2-methylbutyl group, a 1,1-dimethylpropyl group, a 1,2-dimethylpropyl group, an *n*-hexyl group, an *n*-heptyl group, an *n*-octyl group, an *n*-nonyl group, or an *n*-decyl group, more preferably a methyl group, an ethyl group, an *n*-propyl group, an *n*-butyl group, or an *n*-pentyl group, more preferably a methyl group or an ethyl group, and especially preferably an ethyl group. This is because a protective coating film can be formed on negative electrode efficiently.

As R², a hydrocarbon group substituted with a fluorine atom can also be preferably used. Preferable examples of a hydrocarbon group substituted with a fluorine atom include a fluoromethyl group, a fluoroethyl group, a difluoroethyl group, a trifluoroethyl group, a perfluoroethyl group, a fluoro-n-propyl group, a difluoro-n-propyl group, a trifluoro-*n*-propyl group, a perfluoro-*n*-propyl group, a fluoro-n-butyl group, a difluoro-n-butyl group, a trifluoro-n-butyl group, and a perfluoro-n-butyl group. This is because the above-described hydrocarbon groups substituted with fluorine atoms are highly stable compounds.

Specific examples of a chain sulfonate ester include the following.

A methanesulfonate ester such as methyl methanesulfonate, ethyl methanesulfonate, propyl methanesulfonate, butyl methanesulfonate, pentyl methanesulfonate, heptyl methanesulfonate, hexyl methanesulfonate, octyl methanesulfonate, nonyl methanesulfonate, decyl methanesulfonate, 2-propynyl methanesulfonate, 3-butynyl methanesulfonate, busulfan, methyl 2-(methanesulfonyloxy)propionate, ethyl 2-(methanesulfonyloxy)propionate, 2-propynyl 2-(methanesulfonyloxy)propionate, 3-butynyl 2-(methanesulfonyloxy)propionate, methyl methanesulfonyloxyacetate, ethyl methanesulfonyloxyacetate, 2-propynyl methanesulfonyloxyacetate, or 3-butynyl methanesulfonyloxyacetate;
an ethane sulfonate ester such as an ethane sulfonate ester such as methyl ethanesulfonate, ethyl ethanesulfonate, propyl ethanesulfonate, butyl ethanesulfonate, pentyl ethanesulfonate, heptyl ethanesulfonate, hexyl ethanesulfonate, octyl ethanesulfonate, nonyl ethanesulfonate, decyl ethanesulfonate, 2-propynyl ethanesulfonate, 3-butynyl ethanesulfonate, methyl 2-(ethanesulfonyloxy)propionate, ethyl 2-(ethanesulfonyloxy)propionate, 2-propynyl 2-(ethanesulfonyloxy)propionate, 3-butynyl 2-(ethanesulfonyloxy)propionate, methyl ethanesulfonyloxyacetate, ethyl ethanesulfonyloxyacetate, 2-propynyl ethanesulfonyloxyacetate, or 3-butynyl ethanesulfonyloxyacetate;
an alkenyl sulfonate ester such as methyl vinyl sulfonate, ethyl vinyl sulfonate, allyl vinyl sulfonate, propargyl vinyl sulfonate, methyl allyl sulfonate, ethyl allyl sulfonate, allyl allyl sulfonate, propargyl allyl sulfonate, or 1,2-bis(vinyl sulfonyloxy)ethane;
an alkyl disulfonate ester such as methoxycarbonylmethyl methanedisulfonate, ethoxycarbonylmethyl methane disulfonate, 1-methoxycarbonylethyl methane disulfonate, 1-ethoxycarbonylethyl methane disulfonate, methoxycarbonylmethyl 1,2-ethanedisulfonate, ethoxycarbonylmethyl 1,2-ethanedisulfonate, 1-methoxycarbonylethyl 1,2-ethanedisulfonate, 1-ethoxycarbonylethyl 1,2-ethanedisulfonate, methoxycarbonylmethyl 1,3-propanedisulfonate, ethoxycarbonylmethyl 1,3-propanedisulfonate, 1-methoxycarbonylethyl 1,3-propanedisulfonate, 1-ethoxycarbonylethyl 1,3-propanedisulfonate, methoxycarbonylmethyl 1,3-butane disulfonate, ethoxycarbonylmethyl 1,3-butanedisulfonate, 1-methoxycarbonylethyl 1,3-butanedisulfonate, or 1-ethoxycarbonylethyl 1,3-butanedisulfonate.

Among them, a methanesulfonate ester such as methyl methanesulfonate, ethyl methanesulfonate, propyl methanesulfonate, butyl methanesulfonate, pentyl methanesulfonate, heptyl methanesulfonate, hexyl methanesulfonate, octyl methanesulfonate, nonyl methanesulfonate, decyl methanesulfonate, 2-propynyl methanesulfonate, 3-butynyl methanesulfonate, busulfan, methyl 2-(methanesulfonyloxy)propionate, ethyl 2-(methanesulfonyloxy)propionate, 2-propynyl 2-(methanesulfonyloxy)propionate, 3-butynyl 2-(methanesulfonyloxy)propionate, methyl methanesulfonyloxyacetate, ethyl methanesulfonyloxyacetate, 2-propynyl methanesulfonyloxyacetate, or 3-butynyl methanesulfonyloxyacetate; and
an ethane sulfonate ester such as an ethane sulfonate ester such as methyl ethanesulfonate, ethyl ethanesulfonate, propyl ethanesulfonate, butyl ethanesulfonate, pentyl ethanesulfonate, heptyl ethanesulfonate, hexyl ethanesulfonate, octyl ethanesulfonate, nonyl ethanesulfonate, decyl ethanesulfonate, 2-propynyl ethanesulfonate, 3-butynyl ethanesulfonate, methyl 2-(ethanesulfonyloxy)propionate, ethyl 2-(ethanesulfonyloxy)propionate, 2-propynyl 2-(ethanesulfonyloxy)propionate, 3-butynyl 2-(ethanesulfonyloxy)propionate, methyl ethanesulfonyloxyacetate, ethyl ethanesulfonyloxyacetate, 2-propynyl ethanesulfonyloxyacetate, or 3-butynyl ethanesulfonyloxyacetate;
are preferred, methyl methanesulfonate, ethyl methanesulfonate, propyl methanesulfonate, butyl methanesulfonate, pentyl methanesulfonate, heptyl methanesulfonate, hexyl methanesulfonate, octyl methanesulfonate, nonyl methanesulfonate, decyl methanesulfonate, methyl ethanesulfonate, ethyl ethanesulfonate, propyl ethanesulfonate, butyl ethanesulfonate, pentyl ethanesulfonate, heptyl ethanesulfonate, hexyl ethanesulfonate, octyl ethanesulfonate, nonyl ethanesulfonate, and decyl ethanesulfonate are more preferred, methyl methanesulfonate, ethyl methanesulfonate, propyl methanesulfonate, butyl methanesulfonate, pentyl methanesulfonate, heptyl methanesulfonate, hexyl methanesulfonate, methyl ethanesulfonate, ethyl ethanesulfonate, propyl ethanesulfonate, butyl ethanesulfonate, pentyl ethanesulfonate, heptyl ethanesulfonate, and hexyl ethanesulfonate are further preferred, methyl methanesulfonate, ethyl methanesulfonate, propyl methanesulfonate, and butyl methanesulfonate are particularly preferred, and ethyl methanesulfonate and propyl methanesulfonate are extremely preferred.

In the case of a cyclic sulfonate ester, the reactivity is higher than that of a chain sulfonate ester, and the probability of reaction between anion radicals of the cyclic sulfonate ester increases, thus decreasing the amount of reaction with a compound selected from the group consisting of a fluorosulfonate, a monofluorophosphate, a difluorophosphate, an imide salt, and an oxalate. For this reason, a chain sulfonate ester is used in the present embodiment.

The content of a chain sulfonate ester is not particularly limited, and the content of the chain sulfonate ester to the total amount of a non-aqueous electrolytic solution (or in 100% by mass of the non-aqueous electrolytic solution) is usually 1.0 × 10⁻³% by mass or more, and preferably 1.0 × 10⁻²% by mass, more preferably 0.1% by mass or more, further preferably 0.2% by mass or more, particularly preferably 0.3% by mass or more, and usually 10% by mass or less, and preferably 5% by mass or less, more preferably 4% by mass or less, further preferably 3% by mass or less, still further preferably by 2% by mass or less, and particularly preferably 1% by mass or less. When the content of a chain sulfonate ester is within this range, an increase in resistance is small and an effect of the invention is remarkably exhibited.

Identification and measurement of the content of a chain sulfonate ester can be performed by nuclear magnetic resonance (NMR) analysis or gas chromatography (GC) analysis. NMR analysis is usually performed, and GC analysis is also performed when solvent peaks make it difficult to attribute other compounds.

### < 1-2. Fluorosulfonate, Monofluorophosphate, Difluorophosphate, Imide Salt, and Oxalate >

The non-aqueous electrolytic solution of the present invention contains at least one compound selected from the group consisting of a fluorosulfonate, a monofluorophosphate, a difluorophosphate, an imide salt, and an oxalate.

In the case of a non-aqueous electrolytic solution containing a monofluorophosphate or a difluorophosphate, the electrolytic solution contains a chain sulfonate ester and a monofluorophosphate or a difluorophosphate, and the mass ratio of the content of the chain sulfonate ester to the content of the monofluorophosphate or the difluorophosphate is from 10/90 to 82/18. When the content is in this range, a side reaction in a system can be efficiently suppressed and a coating film on a positive electrode can be formed stably, which is excellent from the viewpoint of suppressing normal temperature discharge resistance increase rate.

In the case of a non-aqueous electrolytic solution containing a compound selected from the group consisting of a fluorosulfonate, an imide salt, and an oxalate, the total content of at least one compound selected from the group consisting of a fluorosulfonate, an imide salt, and an oxalate is from 1.0 × 10⁻³% by mass to 7% by mass in 100% by mass of a non-aqueous electrolytic solution, and the mass ratio of the content of a chain sulfonate ester to the content of at least one compound selected from the group consisting of a fluorosulfonate, an imide salt, and an oxalate is from 10/90 to 99.99/0.01. When the content is in this range, a side reaction in an energy device non-aqueous electrolytic solution secondary battery system can be efficiently suppressed, and a coating film on a positive electrode can be formed stably, which is excellent from the viewpoint of suppressing the normal temperature and/or low temperature discharge resistance increase rate.

The mass ratio of the content of the above-described chain sulfonate ester to the content of at least one compound selected from the group consisting of a fluorosulfonate, an imide salt, and an oxalate is preferably 20/80 or more, more preferably 30/70 or more, further preferably 40/60, especially preferably 50/50, particularly preferably 65/35 or more, and most preferably 80/20 or more, and on the other hand, preferably 99.9/0.1 or less, more preferably 98.5/1.5 or less, further preferably 95/5 or less, and particularly preferably 90/10 or less.

When two or more compounds selected from the group consisting of a fluorosulfonate, a monofluorophosphate, a difluorophosphate, an imide salt, and an oxalate are contained, calculation of the mass ratio to the content of the above-described chain sulfonate ester is to use the total content of the two or more compounds. Identification or measurement of the content of a fluorosulfonate, a monofluorophosphate, a difluorophosphate, an imide salt, and an oxalate can be performed by nuclear magnetic resonance (NMR) analysis or ion chromatography (IC) analysis. Usually, IC analysis is performed, and in cases in which it is difficult to attribute a compound from the peaks, NMR analysis is also performed.

### < 1-2-1. Fluorosulfonate >

The fluorsulfonate in the present embodiment is not particularly restricted as long as the compound is a salt with at least one fluorosulfonate structure in the molecule. In the non-aqueous electrolytic solution of the present embodiment, by using the above-described chain sulfonate ester in combination with the fluorosulfonate, the durability characteristics can be improved, in other words, the normal temperature and/or low temperature discharge resistance increase rate can be improved (suppressed) in an energy device using this electrolytic solution.

A counter cation for a fluorosulfonate is not particularly restricted, and examples thereof include lithium, sodium, potassium, rubidium, cesium, magnesium, calcium, barium, and an ammonium represented by NR¹³¹R¹³²R¹³³R¹³⁴ (where R¹³¹ to R¹³⁴ are each independently a hydrogen atom or an organic group having from 1 to 12 carbon atoms). The organic group having from 1 to 12 carbon atoms represented by R¹³¹ to R¹³⁴ of the above-described ammonium is not particularly restricted, and examples thereof include an alkyl group optionally substituted with a fluorine atom, a cycloalkyl group optionally substituted with a halogen atom or an alkyl group, an aryl group optionally substituted with a halogen atom or an alkyl group, and a nitrogen atom-containing heterocyclic group optionally containing a substituent. Among them, R¹³¹ to R¹³⁴ are preferably independently a hydrogen atom, an alkyl group, a cycloalkyl group, a nitrogen atom-containing heterocyclic group, or the like. The counter cation is preferably lithium, sodium, or potassium, and is especially preferably lithium.

Examples of the fluorosulfonate include lithium fluorosulfonate, sodium fluorosulfonate, potassium fluorosulfonate, rubidium fluorosulfonate, and cesium fluorosulfonate, and lithium fluorosulfonate is preferred.

The fluorosulfonate may be used singly, or two or more kinds thereof may be used in any combination and in any ratio. The content of fluorosulfonate (total amount in the case of two or more kinds) in 100% by mass of a non-aqueous electrolytic solution is usually 1.0 × 10⁻³% by mass or more, preferably 0.05% by mass or more, more preferably 0.1% by mass, more preferably 0.2% by mass or more, more preferably 0.3% by mass or more, more preferably 0.4% by mass or more, and usually 10% by mass or less, preferably 8% by mass or less, more preferably 7% by mass or less, more preferably 6% by mass or less, more preferably 5% by mass or less, more preferably 4% by mass or less, more preferably 3% by mass or less, more preferably 2% by mass or less, and more preferably 1% by mass or less. When the content of a fluorosulfonate is within this range, a side reaction is less likely to occur in an energy device, and the resistance is less likely to increase.

The mass ratio (chain sulfonate ester/fluorosulfonate) of the content of the above-described chain sulfonate ester to the content of the fluorosulfonate (or the total amount in the case of two or more kinds) is usually 10/90 or more, preferably 20/80 or more, more preferably 30/70 or more, further preferably 40/60, especially preferably 50/50, particularly preferably 65/35 or more, and most preferably 80/20 or more, and on the other hand, usually 99.99/0.01 or less, preferably 99.9/0.1 or less, more preferably 98.5/1.5 or less, further preferably 95/5 or less, and particularly preferably 90/10 or less. When the mass ratio is in this range, energy device characteristics, especially durability characteristics, can be considerably improved. Although the principle behind this is not known, it is thought to be because mixing at this ratio minimizes a side reaction on an electrode of an additive. In particular, when the mass ratio is 50/50 or more, a reduction reaction of a chain sulfonate ester is more likely to occur than a negative electrode side reaction by a fluorosulfonate, and a stable composite coating film is suitably produced, which is preferable.

When LiPF₆ is contained in a non-aqueous electrolytic solution, the mass ratio of the total content of a fluorosulfonate to the content of LiPF₆ (fluorosulfonate/LiPF₆) is usually 5.0 × 10⁻⁵ or more, preferably 1.0 × 10⁻⁴ or more, more preferably 1.0 × 10⁻³ or more, and further preferably 1.5 × 10⁻³ or more, and usually 0.5 or less, preferably 0.2 or less, more preferably 0.15 or less, further preferably 0.1 or less, and particularly preferably 0.05 or less. When the mass ratio is in this range, energy device characteristics, especially durability characteristics, can be considerably improved. Although the principle behind this is not known, it is thought to be because mixing at this ratio minimizes a decomposition side reaction of LiPF₆ in an energy device system.

### < 1-2-2. Monofluorophosphate And Difluorophosphate >

A monofluorophosphate and a difluorophosphate are not particularly restricted as long as the compounds are each salt with at least one monofluorophosphate or difluorophosphate structure in the molecule. In the non-aqueous electrolytic solution of the present embodiment, by using the above-described chain sulfonate ester in combination with one or more selected from a monofluorophosphate and a difluorophosphate, the durability characteristics can be improved, in other words, the normal temperature discharge resistance increase rate can be improved (suppressed) in an energy device using this electrolytic solution.

Counter cations for the monofluorophosphate and the difluorophosphate are not particularly restricted, and examples thereof include lithium, sodium, potassium, magnesium, calcium, an ammonium represented by NR¹²¹R¹²²R¹²³R¹²⁴ (where R¹²¹ to R¹²⁴ are independently a hydrogen atom or an organic group having from 1 to 12 carbon atoms). The organic group having from 1 to 12 carbon atoms represented by R¹²¹ to R¹²⁴ of the above-described ammonium is not particularly restricted, and examples thereof include an alkyl group optionally substituted with a fluorine atom, a cycloalkyl group optionally substituted with a halogen atom or an alkyl group, an aryl group optionally substituted with a halogen atom or an alkyl group, and a nitrogen atom-containing heterocyclic group optionally containing a substituent. Among them, R¹²¹ to R¹²⁴ are preferably independently a hydrogen atom, an alkyl group, a cycloalkyl group, a nitrogen atom-containing heterocyclic group, or the like. The counter cation is preferably lithium, sodium, or potassium, and is especially preferably lithium.

Examples of the monofluorophosphate and the difluorophosphate include lithium monofluorophosphate, sodium monofluorophosphate, potassium monofluorophosphate, lithium difluorophosphate, sodium difluorophosphate, and potassium difluorophosphate, and lithium monofluorophosphate and lithium difluorophosphate are preferred, and lithium difluorophosphate is more preferred. The monofluorophosphate and the difluorophosphate may be used singly, or two or more kinds thereof may be used in any combination and in any ratio.

The content of one or more fluorophosphates selected from monofluorophosphates and difluorophosphates (or the total amount in the case of two or more kinds) in 100% by mass of a non-aqueous electrolytic solution is usually 1.0 × 10⁻³% by mass or more, preferably 0.01% by mass or more, more preferably 0.1% by mass or more, further preferably 0.2% by mass or more, particularly preferably 0.3% by mass or more, and usually 10% by mass or less, preferably 5% by mass or less, more preferably 3% by mass or less, further preferably 2% by mass or less, especially preferably 1.5% by mass or less, and particularly preferably 1% by mass or less. When the content of fluorophosphate is within this range, an effect of improving the initial irreversible capacity is remarkably exhibited when a non-aqueous electrolytic solution is used in an energy device.

The mass ratio {mass of chain sulfonate ester/(mass of one or more fluorophosphates selected from monofluorophosphate and difluorophosphate)} of the above-described chain sulfonate ester to one or more fluorophosphates selected from a monofluorophosphate and a difluorophosphate (total amount in the case of two or more kinds) is usually 10/90 or more, preferably 20/80 or more, more preferably 30/70 or more, further preferably 40/60 or more, and particularly preferably 50/50 or more, and on the other hand, is usually 82/18 or less, preferably 80/20 or less, more preferably 75/25 or less, further preferably 70/30 or less, and particularly preferably 60/40 or less. When the mass ratio is in this range, energy device characteristics, especially durability characteristics, can be considerably improved. Although the principle behind this is not known, it is thought to be because mixing at this ratio minimizes a side reaction on an electrode of an additive. In particular, when the mass ratio is 50/50 or more, a reduction reaction of a chain sulfonate ester is more likely to occur than a negative electrode side reaction by a monofluorophosphate or a difluorophosphate, and a stable composite coating film is suitably produced, which is preferable. Since a monofluorophosphate or a difluorophosphate interacts strongly with an initial positive electrode, the upper limit of an effective ratio with a chain sulfonate ester is considered to be different from that of a fluorosulfonate, an imide salt, or an oxalate.

When LiPF₆ is contained in a non-aqueous electrolytic solution, the mass ratio (fluorophosphate/LiPF₆) of the total content of one or more fluorophosphates selected from a monofluorophosphate and a difluorophosphate to the content of LiPF₆ is usually 5.0 × 10⁻⁵ or more, preferably 1.0 × 10⁻⁴ or more, more preferably 1.0 × 10⁻³ or more, and further preferably 1.5 × 10⁻³ or more, and usually 0.5 or less, preferably 0.2 or less, more preferably 0.15 or less, further preferably 0.1 or less, and particularly preferably 0.05 or less. When the mass ratio is in this range, energy device characteristics, especially durability characteristics, can be considerably improved. Although the principle behind this is not known, it is thought to be because mixing at this ratio minimizes a decomposition side reaction of LiPF₆ in an energy device system.

### <1-2-3. Imide Salt >

An imide salt is not particularly limited as long as the salt is a salt of an anion having a structure (-SO₂N-SO₂-) in which two sulfonyl groups are bonded to a nitrogen atom or an anion having a structure (-P(O)N-P(O)-) in which two phosphoryl groups are bonded to a nitrogen atom and a counter cation. In the non aqueous electrolytic solution of the present embodiment, by using the above-described chain sulfonate ester in combination with an imide salt, the durability characteristics can be improved or the normal temperature and/or low temperature discharge resistance increase rate can be improved (suppressed) in an energy device using this electrolytic solution.

A counter cation for the imide salt are not particularly restricted, and examples thereof include lithium, sodium, potassium, magnesium, calcium, an ammonium represented by NR²²¹R²²²R²²³R²²⁴ (where R²²¹ to R²²⁴ are independently a hydrogen atom or an organic group having from 1 to 12 carbon atoms). The organic group having from 1 to 12 carbon atoms represented by R²²¹ to R²²⁴ of the above-described ammonium is not particularly restricted, and examples thereof include an alkyl group optionally substituted with a fluorine atom, a cycloalkyl group optionally substituted with a halogen atom or an alkyl group, an aryl group optionally substituted with a halogen atom or an alkyl group, and a nitrogen atom-containing heterocyclic group optionally containing a substituent. Among them, R²²¹ to R²²⁴ are preferably independently a hydrogen atom, an alkyl group, a cycloalkyl group, a nitrogen atom-containing heterocyclic group, or the like. The counter cation is preferably lithium, sodium, or potassium, and is especially preferably lithium.

Examples of the lithium imide include a lithium carbonyl imide salt; a lithium sulfonyl imide salt such as lithium bis(fluorosulfonyl)imide, lithium bis(trifluoromethanesulfonyl)imide, lithium bis(pentafluoroethanesulfonyl)imide, or lithium bis(nonafluorobutanesulfonyl)imide; and a lithium phosphonyl imide salt such as lithium bis(difluorophosphonyl)imide. Among them, lithium bis(fluorosulfonyl)imide is more preferred from the viewpoint of less side reactions in a positive electrode.

The imide salt may be used singly, or two or more kinds thereof may be used in any combination and in any ratio. The content of an imide salt (total amount in the case of two or more kinds) in 100% by mass of a non-aqueous electrolytic solution is usually 1.0 × 10⁻³% by mass or more, preferably 0.05% by mass or more, more preferably 0.1% by mass, more preferably 0.2% by mass or more, more preferably 0.3% by mass or more, more preferably 0.4% by mass or more, and usually 10% by mass or less, preferably 8% by mass or less, more preferably 7% by mass or less, more preferably 6% by mass or less, more preferably 5% by mass or less, more preferably 4% by mass or less, more preferably 3% by mass or less, more preferably 2% by mass or less, and more preferably 1% by mass or less. When the content of an imide salt is within this range, there are fewer side reactions at a negative electrode.

The mass ratio (chain sulfonate ester/imide salt) of the content of the above-described chain sulfonate ester to the content of the imide salt (or the total amount in the case of two or more kinds) is usually 10/90 or more, preferably 20/80 or more, more preferably 30/70 or more, further preferably 40/60 or more, particularly preferably 50/50 or more, and on the other hand, usually 99.99/0.01 or less, preferably 99.9/0.1 or less, more preferably 98.5/1.5 or less, further preferably 95/5 or less, and particularly preferably 90/10 or less. When the mass ratio is in this range, energy device characteristics, especially durability characteristics, can be considerably improved. Although the principle behind this is not known, it is thought to be because mixing at this ratio minimizes a side reaction on an electrode of an additive. In particular, when the mass ratio is 50/50 or more, a reduction reaction of a chain sulfonate ester is more likely to occur than a negative electrode side reaction by an imide salt, and a stable composite coating film is suitably produced, which is preferable.

When LiPF₆ is contained in a non-aqueous electrolytic solution, the mass ratio of the total content of an imide salt to the content of LiPF₆ (imide salt/LiPF₆) is usually 5.0 × 10⁻⁵ or more, preferably 1.0 × 10⁻⁴ or more, more preferably 1.0 × 10⁻³ or more, and further preferably 1.5 × 10⁻³ or more, and usually 0.5 or less, preferably 0.2 or less, more preferably 0.15 or less, further preferably 0.1 or less, and particularly preferably 0.05 or less. When the mass ratio is in this range, energy device characteristics, especially durability characteristics, can be considerably improved. Although the principle behind this is not known, it is thought to be because mixing at this ratio minimizes a decomposition side reaction of LiPF₆ in an energy device system.

### < 1-2-4. Oxalate >

In the present embodiment, an oxalate is not particularly restricted as long as the compound is a compound having at least one oxalic acid structure in the molecule. In the non-aqueous electrolytic solution of the present embodiment, by using a chain sulfonate ester in combination with an oxalate, the durability characteristics, or the normal temperature and/or low temperature discharge resistance increase rate, can be improved in an energy device using this electrolytic solution.

As the oxalate salt, a metal salt represented by Formula (9) below is preferred. This salt is a salt with an oxalato complex as an anion. 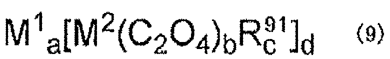 (where M¹ is an element selected from the group consisting of group 1, group 2 and aluminum (Al) in the periodic table, M² is an element selected from the group consisting of a transition metal, group 13, group 14, and group 15 in the periodic table, R⁹¹ is a group selected from the group consisting of halogen, an alkyl group having from 1 to 11 carbon atoms and a halogen-substituted alkyl group having from 1 to 11 carbon atoms, a and b are positive integers, c is 0 or a positive integer and d is an integer from 1 to 3.)

From the viewpoint of energy device characteristics when the non-aqueous electrolytic solution of the present embodiment is used in an energy device such as a lithium secondary battery, M¹ is preferably lithium, sodium, potassium, magnesium, or calcium, and is particularly preferably lithium.

From the viewpoint of electrochemical stability when used in lithium secondary batteries, lithium ion capacitors, and other lithium-based energy devices, M² is particularly preferably boron and phosphorus.

Examples of R⁹¹ include fluorine, chlorine, a methyl group, a trifluoromethyl group, an ethyl group, a pentafluoroethyl group, a propyl group, an isopropyl group, a butyl group, a *sec*-butyl group, and a tert-butyl group, and fluorine and trifluoromethyl are preferred.

Examples of a metal salt represented by Formula (9) include the following:
a lithium oxalatoborate salt such as lithium difluorooxalato borate and lithium bis(oxalato)borate; and
a lithium oxalatophosphate salt such as lithium tetrafluorooxalato phosphate, lithium difluorobis(oxalato)phosphate, or lithium tris(oxalato)phosphate;

Among them, lithium bis(oxalato)borate and lithium difluorobis(oxalato)phosphate are preferred, and lithium bis(oxalato)borate is more preferred.

The oxalate may be used singly, or two or more kinds thereof may be used in any combination and in any ratio. The content of an oxalate (total amount in the case of two or more kinds) in 100% by mass of a non-aqueous electrolytic solution is usually 1.0 × 10⁻³% by mass or more, and preferably 0.01% by mass or more, more preferably 0.1% by mass or more, particularly preferably 0.3% by mass or more, and is usually 10% by mass or less, and preferably 7% by mass or less, more preferably 6% by mass or less, further preferably 5% by mass or less, especially preferably 3% by mass or less, particularly preferably 2% by mass or less, and most preferably 1% by mass or less. When the content of an oxalate is within this range, the output characteristics, load characteristics, low temperature characteristics, cycle characteristics, high temperature storage characteristics, and the like of an energy device are easy to control.

The mass ratio (chain sulfonate ester/oxalate) of the content of the above-described chain sulfonate ester to the content of the oxalate (or the total amount in the case of two or more kinds) is usually 10/90 or more, preferably 20/80 or more, more preferably 30/70 or more, further preferably 40/60 or more, particularly preferably 50/50 or more, and on the other hand, usually 99.99/0.01 or less, preferably 99.9/0.1 or less, more preferably 98.5/1.5 or less, further preferably 95/5 or less, and particularly preferably 90/10 or less. When the mass ratio is in this range, energy device characteristics, especially durability characteristics, can be considerably improved. Although the principle behind this is not known, it is thought to be because mixing at this ratio minimizes a side reaction on an electrode of an additive. In particular, when the mass ratio is 50/50 or more, a reduction reaction of a chain sulfonate ester is more likely to occur than a negative electrode side reaction by an oxalate, and a stable composite coating film is suitably produced, which is preferable.

When a non-aqueous electrolytic solution contains LiPF₆, the mass ratio of the total content of an oxalate to the content of LiPF₆ (oxalate /LiPF₆) is usually 5.0 × 10⁻⁵ or more, preferably 1.0 × 10⁻⁴ or more, more preferably 1.0 × 10⁻³ or more, and further preferably 1.5 × 10⁻³ or more, and usually 0.5 or less, preferably 0.2 or less, more preferably 0.15 or less, further preferably 0.1 or less, and particularly preferably 0.05 or less. When the mass ratio is in this range, energy device characteristics, especially durability characteristics, can be considerably improved. Although the principle behind this is not known, it is thought to be because mixing at this ratio minimizes a decomposition side reaction of LiPF₆ in an energy device system.

### < 1-2-5. Total Concentration of Combined Additives and the like >

When the non-aqueous electrolytic solution contains LiPF₆ in addition to at least one compound selected from the group consisting of a fluorosulfonate, a monofluorophosphate, a difluorophosphate, an imide salt, and an oxalate, the mass ratio of the total content of the above-described additives to the content of LiPF₆ (total content of additives/content of LiPF₆) is usually 5.0 × 10⁻⁵ or more, preferably 1.0 × 10⁻⁴ or more, more preferably 1.0 × 10⁻³ or more, further preferably 0.02 or more, and particularly preferably 0.025 or more, and is usually 0.5 or less, and preferably 0.45 or less, more preferably 0.4 or less, and further preferably 0.35 or less. When the mass ratio is in this range, energy device characteristics, especially durability characteristics, can be considerably improved. Although the principle behind this is not known, it is thought to be because mixing at this ratio minimizes a decomposition side reaction of LiPF₆ in an energy device system.

When the non-aqueous electrolytic solution contains at least two compounds selected from the group consisting of a fluorosulfonate, a monofluorophosphate, a difluorophosphate, an imide salt, and an oxalate, the total content of the combined additives other than the above-described chain sulfonate esters in 100% by mass of the non-aqueous electrolytic solution is usually 1.0 × 10⁻³% by mass or more, preferably 0.01% by mass or more, more preferably 0.1% by mass or more, further preferably 0.3% by mass or more, and particularly preferably 0.6% by mass or more, and usually 10% by mass or less, and preferably 8% by mass or less, more preferably 7% by mass or less, further preferably 6% by mass or less, and particularly preferably 5% by mass or less. When the total content of additives is within this range, a side reaction in an energy device system can be efficiently suppressed.

### <1-3. Electrolyte >

The non-aqueous electrolytic solution of the present embodiment, like general non-aqueous electrolytic solutions, usually contains an electrolyte as a component thereof. The electrolyte used in the non-aqueous electrolytic solution of the present embodiment is not particularly restricted, and any known electrolyte can be used. The total concentration of an electrolyte in a non-aqueous electrolytic solution is not particularly restricted, and is, with respect to the total amount of non-aqueous electrolytic solution, usually 8% by mass or more, preferably 8.5% by mass or more, and more preferably 9% by mass or more. The concentration is usually 20% by mass or less, and preferably 17% by mass or less, and more preferably 16% by mass or less. When the total concentration of the electrolyte is within the above-described range, the electrical conductivity is suitable for operation of a non-aqueous electrolytic solution secondary battery, and therefore, sufficient output characteristics tend to be obtained. Specific examples of the electrolyte will be described in detail below.

### < 1-3-1. Lithium Salt >

As the electrolyte in the non-aqueous electrolytic solution of the embodiment, a lithium salt is usually used. The lithium salt is not particularly restricted as long as the salt is known to be used for this application, and one or more of any type can be used, and specific examples thereof include the following.

A lithium fluorophosphate salt such as LiPF₆, Li₂PO₃F, or LiPO₂F₂;
a lithium tungstate such as LiWOF₅;
a lithium carboxylate salt such as CF₃CO₂Li;
a lithium sulfonate salt such as CH₃SO₃Li or FSO₃Li;
a lithium imide salt such as LiN(FSO₂)₂ or LiN(CF₃SO₂)₂;
a lithium methide salt such as LiC(FSO₂)₃;
a lithium oxalate salt such as LiB(C₂O₄)₂; and
a fluorine-containing organic lithium salt such as LiPF₄(CF₃)₂;

The lithium salts listed above may be used singly or in combination of two or more kinds thereof. However, when a lithium salt electrolyte corresponding to a combined additive is contained in a non-aqueous electrolytic solution, an electrolyte other than the lithium salt corresponding to the combined additive is always contained.

From the point of view of further enhancing an effect of improving charge/discharge rate characteristics and impedance characteristics, in addition to improving the charge storage characteristics of an energy device in a high temperature environment, the electrolyte in the non-aqueous electrolytic solution of the present embodiment is preferably selected from an inorganic lithium salt, a lithium fluorophosphate salt, a lithium sulfonate salt, an imide salt, or a lithium oxalate salt. Among them, when the content of lithium monofluorophosphate or lithium difluorophosphate is 7% by mass or less in 100% by mass of the non-aqueous electrolytic solution, the electrolytic solution is preferably at least one selected from LiPF₆, LiBF₄, LiClO₄, LiB(C₂O₄)₂, Li(FSO₂)₂N, and Li(CF₃SO₂)₂N, more preferably at least one selected from LiPF₆, LiBF₄, Li(FSO₂)₂N, and Li(CF₃SO₂)₂N, further preferably at least one of LiPF₆ and Li(FSO₂)₂N, and particularly preferably LiPF₆. When the total content of at least one lithium salt selected from the group consisting of a lithium fluorosulfonate, an imide salt, and a lithium oxalate is from 1.0 × 10⁻³% by mass to 7% by mass in 100% by mass of a non-aqueous electrolytic solution, the electrolytic solution is preferably at least one selected from LiPF₆, LiBF₄, and LiClO₄, more preferably at least one selected from LiPF₆ and LiBF₄, and particularly preferably LiPF₆.

When a lithium salt is used as a main salt in a non-aqueous electrolytic solution, the concentration of the lithium salt, with respect to the total volume of the non-aqueous electrolytic solution, is usually 8% by mass or more, preferably 8.5% by mass or more, more preferably 9% by mass or more. The concentration is usually 20% by mass or less, preferably 17% by mass or less, and more preferably 16% by mass or less. When the concentration of the lithium salt as the main salt is within the above-described range, the electrical conductivity is appropriate for operation of an energy device, and sufficient output characteristics tend to be obtained. When a lithium salt is used as a secondary salt in a non-aqueous electrolytic solution, the concentration of the lithium salt, with respect to the total volume of the non-aqueous electrolytic solution, is usually 0.05% by mass or more, and preferably 0.1% by mass or more, more preferably 0.2% by mass or more, further preferably 0.3% by mass or more, and particularly preferably 0.4% by mass or more, and is usually 2% by mass or less, and particularly preferably 1% by mass or less. When the concentration of the lithium salt as a secondary salt is within this range, there are fewer side reactions in an energy device, and the resistance is less likely to increase.

When a non-aqueous electrolytic solution contains LiPF₆, PF₆-anion is considered to be entirely derived from LiPF₆, and the mass ratio (chain sulfonate ester/ LiPF₆) of the total content of the chain sulfonate ester to the content of LiPF₆, which is calculated therefrom, is usually 5.0 × 10⁻⁵ or more, preferably 1.0 × 10⁻³ or more, more preferably 0.01 or more, further preferably 0.02 or more, and particularly preferably 0.025 or more, and usually 0.3 or less, and preferably 0.2 or less, more preferably 0.1 or less, further preferably 0.09 or less, and particularly preferably 0.08 or less. When the content of LiPF₆ is in this range, characteristics of an energy device, especially the durability characteristics, can be considerably improved. Although the principle behind this is not known, it is thought that mixing at this ratio minimizes decomposition side reaction of LiPF₆ in an energy device system.

With respect to the mass ratios for combined additives other than chain sulfonate esters, similarly, the mass of LiPF₆ in the non-aqueous electrolytic solution is considered to be the mass calculated from the assumption that all of the PF₆⁻ anions are derived from LiPF₆.

### < 1-4. Non-aqueous Solvent >

Like general non-aqueous electrolytic solutions, non-aqueous electrolytic solutions usually contain, as their main component, a non-aqueous solvent that dissolves the above-described electrolyte. The non-aqueous solvent is not particularly restricted, and any known organic solvent can be used. The organic solvent is not particularly limited, and examples thereof include a saturated cyclic carbonate, a chain carbonate, a chain carboxylate ester, an ether compound, a sulfone compound (except for a chain sulfonate ester), and a cyclic carbonate ester. Among them, the organic solvent is preferably at least one selected from a saturated cyclic carbonate, a chain carbonate, and a chain carboxylate ester, and more preferably contains at least a chain carboxylic ester, in that it is easier to improve the initial capacity of an energy device. These can be used singly or in combination of two or more kinds thereof. These organic solvents will be described below.

### < 1-4-1. Saturated Cyclic Carbonate >

Examples of the saturated cyclic carbonate usually include those containing an alkylene group having from 2 to 4 carbon atoms, and from the viewpoint of improving energy device characteristics derived from enhancement of lithium ion dissociation, a saturated cyclic carbonate having from 2 to 3 carbon atoms is preferably used.

Examples of the saturated cyclic carbonate include ethylene carbonate, propylene carbonate, and butylene carbonate. Among them, ethylene carbonate and propylene carbonate are preferred, and ethylene carbonate, which is less susceptible to oxidation and reduction, is more preferred. Saturated cyclic carbonates may be used singly, or two or more kinds thereof may be used together in any combination and in any ratio.

The content of the saturated cyclic carbonate is not particularly restricted, and is any amount without considerably impairing an effect of the invention of the present embodiment, and when one kind thereof is used singly, the lower limit of the content, with respect to the total solvent content of the non-aqueous electrolytic solution, is usually 3% by volume or more, and preferably 5% by volume or more. By setting the lower limit of the content of the saturated cyclic carbonate in this range, decrease in electrical conductivity derived from decrease in dielectric constant of a non-aqueous electrolytic solution is avoided, and it becomes easier to keep the high-current discharge characteristics, stability to a negative electrode, and cycle characteristics of an energy device such as a non-aqueous electrolytic solution secondary battery with a non-aqueous electrolytic solution in a favorable range. The upper limit of the content of content of the saturated cyclic carbonate, with respect to the total solvent content of the non-aqueous electrolytic solution, is usually 90% by volume or less, preferably 85% by volume or less, and more preferably 80% by volume or less. This range tends to improve the oxidation/reduction resistance of a non-aqueous electrolytic solution and the stability during storage at high temperatures.

The % by volume in the present embodiment means the volume at 25°C and 1 atmospheric pressure.

### < 1-4-2. Chain Carbonate >

As chain carbonates, those having from 3 to 7 carbon atoms are usually used, and in order to adjust the viscosity of an electrolytic solution to an appropriate range, chain carbonates having from 3 to 5 carbon atoms are preferably used.

Specific examples of a chain carbonate include dimethyl carbonate, diethyl carbonate, di-*n*-propyl carbonate, diisopropyl carbonate, *n*-propylisopropyl carbonate, ethyl methyl carbonate, methyl-n-propyl carbonate, *n*-butyl methyl carbonate, isobutyl methyl carbonate, t-butyl methyl carbonate, ethyl-*n*-propyl carbonate, *n*-butylethyl carbonate, isobutylethyl carbonate, t-butylethyl carbonate.

Among them, dimethyl carbonate, diethyl carbonate, di-*n*-propyl carbonate, diisopropyl carbonate, *n*-propylisopropyl carbonate, ethyl methyl carbonate, and methyl-n-propyl carbonate are preferred, and dimethyl carbonate, diethyl carbonate, and ethyl methyl carbonate are particularly preferred.

A chain carbonate containing a fluorine atom (hereinafter, sometimes abbreviated as "fluorinated chain carbonate") can also be suitably used. The number of fluorine atoms in a fluorinated chain carbonate is not particularly restricted as long as the number is 1 or more, and is usually 6 or less, preferably 4 or less. When a fluorinated chain carbonate contains a plurality of fluorine atoms, the atoms may be bonded to the same carbon or to different carbons. Examples of a fluorinated chain carbonate include a fluorinated dimethyl carbonate derivative, a fluorinated ethyl methyl carbonate derivative, and a fluorinated diethyl carbonate derivative.

Examples of a fluorinated dimethyl carbonate derivative include fluoromethyl methyl carbonate, difluoromethyl methyl carbonate, trifluoromethyl methyl carbonate, bis(fluoromethyl) carbonate, bis(difluoro) methyl carbonate, and bis(trifluoromethyl) carbonate.

Examples of a fluorinated ethyl methyl carbonate derivative include 2-fluoroethyl methyl carbonate, ethyl fluoro methyl carbonate, 2,2-difluoroethyl methyl carbonate, 2-fluoroethyl fluoro methyl carbonate, ethyl difluoromethyl carbonate, 2,2,2-trifluoroethyl methyl carbonate, 2,2-difluoroethyl fluoro methyl carbonate, 2-fluoroethyl difluoro methyl carbonate, and ethyl trifluoro methyl carbonate.

Examples of a fluorinated diethyl carbonate derivative include ethyl-(2-fluoroethyl) carbonate, ethyl-(2,2-difluoroethyl) carbonate, bis(2-fluoroethyl) carbonate, ethyl-(2,2,2-trifluoroethyl)carbonate, 2,2-difluoroethyl-2'-fluoroethyl carbonate, bis(2,2-difluoroethyl) carbonate, 2,2,2-trifluoroethyl-2'-fluoroethyl carbonate, 2,2,2-trifluoroethyl-2',2'-difluoroethylcarbonate, and bis(2,2,2-trifluoroethyl) carbonate.

Chain carbonate may be used singly, or two or more kinds thereof may be used together in any combination and in any ratio.

The content of a chain carbonate is not particularly limited, and is usually 15% by volume or more, and preferably 20% by volume or more, and more preferably 25% by volume or more, and is usually 90% by volume or less, and preferably 85% by volume or less, and more preferably 80% by volume or less with respect to the total solvent content of a non-aqueous electrolytic solution. By setting the content of a chain carbonate in the above-described range, the viscosity of the non-aqueous electrolytic solution is made to be in the appropriate range, decrease in ionic conductivity is suppressed, and in turn, the output characteristics of an energy device such as a non-aqueous electrolytic solution secondary battery can easily be in a favorable range.

Furthermore, by combining a specific content of ethylene carbonate with a specific chain carbonate, energy device performance can be considerably improved.

For example, when dimethyl carbonate and ethyl methyl carbonate are selected as specific chain carbonates, the content of ethylene carbonate is not particularly limited and is any amount as long as an effect of the invention according to the present embodiment is not considerably impaired, and is usually 15% by volume or more, preferably 20% by volume or more, and usually 45% by volume or less, and preferably 40% by volume or less, with respect to the total solvent content in the non-aqueous electrolytic solution; the content of dimethyl carbonate is usually 20% or more by volume, and preferably 30% or more by volume, and usually 50% or less by volume, and preferably 45% or less by volume, with respect to the total solvent content of the non-aqueous electrolytic solution; and the content of ethyl methyl carbonate is usually 20% by volume or more, and preferably 30% by volume or more, and is usually 50% by volume or less, and preferably 45% by volume or less. When the content of ethylene carbonate, dimethyl carbonate, and ethyl methyl carbonate is within the above-described range, high temperature stability is excellent and gas generation tends to be suppressed.

### < 1-4-3. Chain Carboxylate Ester >

Chain carboxylic acid esters having from 3 to 12 carbon atoms are preferred, and those having from 3 to 5 carbon atoms are more preferred.

As the chain carboxylate ester,
from the viewpoint of less side reactions at a negative electrode, methyl acetate, ethyl acetate, *n*-propyl acetate, *n*-butyl acetate, methyl propionate, ethyl propionate, *n*-propyl propionate, *n*-butyl propionate, methyl butyrate, ethyl butyrate, *n*-propyl butyrate, *n*-butyl butyrate, methyl valerate, ethyl valerate, *n*-propyl valerate, *n*-butyl valerate, methyl pivalate, ethyl pivalate, *n*-propyl pivalate, or *n*-butyl pivalate is preferred; from the viewpoint of improved ionic conductivity due to decreased electrolytic solution viscosity, methyl acetate, ethyl acetate, *n*-propyl acetate, *n*-butyl acetate, methyl propionate, ethyl propionate, *n*-propyl propionate, or *n*-butyl propionate is more preferred; methyl acetate, ethyl acetate, methyl propionate, and ethyl propionate are further preferred; and methyl acetate or ethyl acetate is particularly preferred.

When a chain carboxylate ester is used for a non-aqueous solvent, the content in 100 volume percent of the total non-aqueous solvent is preferably 1% by volume or more, more preferably 5% by volume or more, and further preferably 10% by volume or more, and the chain carboxylate ester may be contained at 50% by volume or less, more preferably at 45% by volume or less, and further preferably at 40% by volume or less. When the content of a chain carboxylate ester is in the above-described range, the electrical conductivity of a non-aqueous electrolytic solution is improved, which facilitates improving the input/output characteristics and charge/discharge rate characteristics of an energy device such as a non-aqueous electrolytic solution secondary battery. Furthermore, an increase in negative electrode resistance is suppressed, and it becomes easier to make the input/output characteristics and charge/discharge rate characteristics of an energy device such as a non-aqueous electrolytic solution secondary battery in a favorable range.

When a chain carboxylate ester is used as a non-aqueous solvent, the ester is preferably used in combination with a cyclic carbonate, and even more preferably in combination with a cyclic carbonate and a chain carbonate. This is because while lowering the low temperature deposition temperature of an electrolyte, the viscosity of the non-aqueous electrolytic solution is also reduced, improving ionic conductivity, allowing for even higher input and output at low temperatures, and further reducing swelling of an energy device, especially a battery.

### < 1-4-4. Ether Compound >

As ether compounds, chain ethers having from 3 to 10 carbon atoms and cyclic ethers having from 3 to 6 carbon atoms are preferred.

As the cyclic ester having from 3 to 10 carbon atoms, dimethoxymethane, diethoxymethane, methoxyethoxymethane, ethylene glycol di-*n*-propyl ether, ethylene glycol di-*n*-butyl ether, or diethylene glycol dimethyl ether is preferred from the viewpoint of high solvation ability to lithium ions and improved ion dissociation. Dimethoxymethane, diethoxymethane, and methoxyethoxymethane are particularly preferred because of low viscosity and imparting high ionic conductivity.

Examples of the cyclic ether having from 3 to 6 carbon atoms include tetrahydrofuran, 2-methyltetrahydrofuran, 3-methyltetrahydrofuran, 1,3-dioxane, 2-methyl-1,3-dioxane, 4-methyl-1,3-dioxane, 1,4-dioxane, and a fluorinated compound thereof.

The content of the ether compound is not particularly restricted and is any amount as long as an effect of the invention according to the present embodiment is not considerably impaired, and the content in 100% by volume of a non-aqueous solvent is usually 1% by volume or more, and preferably 2% by volume or more, and more preferably 3% by volume or more, and is usually 30% by volume or less, and preferably 25% by volume or less, and more preferably 20% by volume or less. When the content of the ether compound is within the above-described preferable range, it is easy to ensure an effect of improved lithium ion dissociation and improved ion conductivity derived from reduced viscosity. When the negative electrode active material is carbonaceous material, a phenomenon in which a chain ether is co-inserted together with lithium ion can be suppressed, and therefore input/output characteristics and charge/discharge rate characteristics can be set within an appropriate range.

### < 1-4-5. Sulfone Compound >

Examples of a sulfone compound (excluding chain sulfonate esters) include a sulfolane, and among them, a sulfolane and a sulfolane derivative are preferred. As sulforane derivatives, those in which one or more hydrogen atoms bonded on a carbon atom constituting a sulfolane ring are substituted with a fluorine atom, an alkyl group, or a fluorine-substituted alkyl group, are preferred.

In particular, 2-methylsulforane, 3-methylsulforane, 2-fluorosulforane, 3-fluorosulforane, 2,3-difluorosulforane, 2-trifluoromethylsulforane, and 3-trifluoromethylsulforane are preferred because the ionic conductivity is high and the input/output is high.

Sulfone compounds may be used singly, or two or more kinds thereof may be used together in any combination and ratio.

The content of a sulfone compound is not particularly restricted and is any amount as long as an effect of the invention according to the present embodiment is not considerably impaired, and the lower limit of the content when one kind thereof is used singly is usually 3% by volume or more, and preferably 5% by volume or more, with respect to the total solvent content of a non-aqueous electrolytic solution. By setting the lower limit of the content of a sulfone compound in this range, reduction in electrical conductivity derived from a decrease in dielectric constant of a non-aqueous electrolytic solution is avoided, and it becomes easier to keep the high-current discharge characteristics, stability to a negative electrode, and cycle characteristics of a non-aqueous electrolytic solution secondary battery such as a non-aqueous electrolytic solution secondary battery in a favorable range. The upper limit of the content of content of a saturated cyclic carbonate, with respect to the total solvent content of a non-aqueous electrolytic solution, is usually 90% by volume or less, preferably 85% by volume or less, and more preferably 80% by volume or less. When the content is within this range, the oxidation and reduction resistance of a non-aqueous electrolytic solution tends to improve, and the stability of the electrolytic solution when stored at high temperatures tends to improve.

### <1-4-6. Cyclic Carboxylate Ester >

Cyclic carboxylate esters having from 3 to 12 carbon atoms are preferred.

Specific examples thereof include γ-butyrolactone, γ-valerolactone, γ-caprolactone, and ε-caprolactone. Among them, γ-butyrolactone is particularly preferred from the viewpoint of improved energy device characteristics derived from improved lithium ion dissociation.

Cyclic carboxylate esters may be used singly, or two or more kinds thereof may be used together in any combination and ratio.

The content of cyclic carboxylate ester, in 100% by volume of a non-aqueous solvent, is preferably 5% by volume or more, and more preferably 10% by volume or more. When the content is in this range, the electrical conductivity of a non-aqueous electrolytic solution is improved, and the high-current discharge characteristics of an energy device can be easily enhanced. The content of a cyclic carboxylate ester is preferably 50% by volume or less, and more preferably 40% by volume or less. By setting the upper limit in such a manner, the viscosity of a non-aqueous electrolytic solution can be set to an appropriate range, decrease in electrical conductivity can be avoided, increase in negative electrode resistance can be suppressed, and the high-current discharge characteristics of an energy device are easily made to be in a favorable range.

### < 1-5. Auxiliary Agent >

A non-aqueous electrolytic solution may contain the following auxiliary agents to an extent that an effect of the invention according to the present embodiment is achieved. The auxiliary agents are not particularly limited, and examples thereof include a cyclic carbonate with a carbon-carbon unsaturated bond, a fluorine-containing cyclic carbonate, a sulfur-containing organic compound, a phosphorus-containing organic compound, an organic compound containing a cyano group, an organic compound containing an isocyanate group, a silicon-containing compound, a borate, and an aromatic carbonate. Among them, the auxiliary agent is preferably at least one selected from a cyclic carbonate containing a carbon-carbon unsaturated bond and a fluorine-containing cyclic carbonate. These can be used singly or in combination of two or more kinds thereof. The following is a specific description of auxiliary agents.

### < 1-5-1. Cyclic Carbonate Containing Carbon-Carbon Unsaturated Bond >

A cyclic carbonate containing a carbon-carbon unsaturated bond (hereinafter, also referred to as "unsaturated cyclic carbonate") is not particularly restricted as long as the carbonate is a cyclic carbonate containing a carbon-carbon double bond or a carbon-carbon triple bond. The cyclic carbonate containing an aromatic ring is also included in the unsaturated cyclic carbonate.

Examples of the unsaturated cyclic carbonate include a vinylene carbonate, an ethylene carbonate substituted with a substituent containing an aromatic ring, a carbon-carbon double bond, or a carbon-carbon triple bond, a phenyl carbonate, a vinyl carbonate, an allyl carbonate, a catechol carbonate. Among them, a vinylene carbonate or an ethylene carbonate substituted with an aromatic ring or a substituent containing a carbon-carbon double bond or a carbon-carbon triple bond is preferred.

Specific examples of the unsaturated cyclic carbonate include a vinylene carbonate such as vinylene carbonate, methyl vinylene carbonate, 4,5-dimethyl vinylene carbonate, phenyl vinylene carbonate, 4,5-diphenyl vinylene carbonate, vinyl vinylene carbonate, 4,5-vinyl vinylene carbonate, allyl vinylene carbonate, or 4,5-diallyl vinylene carbonate; and an ethylene carbonate substituted with a substituent containing an aromatic ring or a carbon-carbon double bond or a carbon-carbon triple bond such as vinylethylene carbonate, 4,5-divinylethylene carbonate, 4-methyl-5-vinylethylene carbonate, 4-allyl-5-vinylethylene carbonate, ethynylethylene carbonate, 4,5-dietinylethylene carbonate, 4-methyl-5-ethynylethylene carbonate, 4-vinyl-5-ethynylethylene carbonate, 4-allyl-5-ethynylethylene carbonate, phenylethylene carbonate, 4,5-diphenylethylene carbonate, 4-phenyl-5-vinylethylene carbonate, 4-allyl-5-phenylethylene carbonate, allylethylene carbonate, 4,5-diallylethylene carbonate, or 4-methyl-5-allylethylene carbonate.
Among them, vinylene carbonate, vinylethylene carbonate, and ethynylethylene carbonate are preferred because a further stable interface protective coating film is formed, and vinylene carbonate and vinylethylene carbonate are more preferred.

The unsaturated cyclic carbonate may be used singly or in combination of two or more kinds thereof in any combination and ratio. The content of the unsaturated cyclic carbonate (or the total amount in the case of two or more kinds thereof) can be 1.0 × 10⁻³% by mass or more, preferably 0.01% by mass or more, more preferably 0.1% by mass or more, and can be 5% or less by mass, preferably 4% by mass or less, and preferably 3% by mass or less in 100% by mass of the non-aqueous electrolytic solution. When the content of the unsaturated cyclic carbonate is within this range, an energy device such as a non-aqueous electrolytic solution battery can easily exhibit a sufficient cycle characteristics improvement effect and avoid a situation in which high temperature storage characteristics deteriorate, gas generation increases, and the discharge capacity retention rate decreases.

The mass ratio of the content of the above chain sulfonate ester (chain sulfonate ester/unsaturated cyclic carbonate) to the content of unsaturated cyclic carbonate (total amount in the case of two or more types) is usually 1/100 or more, preferably 10/100 or more, more preferably 20/100 or more, and further preferably 25/100 or more, and is usually 10,000/100 or less, and preferably 500/100 or less, and more preferably 300/100 or less. When the mass ratio is in this range, energy device characteristics, especially durability characteristics, can be considerably improved. Although the principle behind this is not known, it is thought to be because mixing at this ratio minimizes a side reaction on an electrode of an additive.

When a non-aqueous electrolytic solution contains LiPF₆, the mass ratio (unsaturated cyclic carbonate/LiPF₆) of the total content of an unsaturated cyclic carbonate to the content of LiPF₆ is usually 5.0 × 10⁻⁵ or more, and preferably 1.0 × 10⁻³ or more, more preferably 0.01 or more, further preferably 0.02 or more, and particularly preferably 0.025 or more, and is usually 0.5 or less, and preferably 0.45 or less, more preferably 0.4 or less, and further preferably 0.35 or less. When the mass ratio is in this range, energy device characteristics, especially durability characteristics, can be considerably improved. Although the principle behind this is not known, it is thought to be because mixing at this ratio minimizes LiPF₆ decomposition side reaction in an energy device system.

### < 1-5-2. Fluorine-containing Cyclic Carbonate >

The fluorine-containing cyclic carbonate is not particularly restricted as long as the carbonate has a cyclic carbonate structure and contains a fluorine atom.

Examples of the fluorine-containing cyclic carbonate include a fluorinated cyclic carbonate containing an alkylene group having from 2 to 6 carbon atoms, and a derivative thereof, such as a fluorinated ethylene carbonate (hereinafter, sometimes referred to as "fluorinated ethylene carbonate"), and a derivative thereof. Examples of the derivative of a fluorinated ethylene carbonate include a fluorinated ethylene carbonate substituted with an alkyl group (for example, an alkyl group having from 1 to 4 carbon atoms). Among them, a fluorinated ethylene carbonate having from 1 to 8 fluorine atoms and a derivative thereof are preferred.

Examples of the fluorinated ethylene carbonate having from 1 to 8 fluorine atoms and the derivative thereof include monofluoroethylene carbonate, 4,4-difluoroethylene carbonate, 4,5-difluoroethylene carbonate, 4-fluoro-4-methylethylene carbonate, 4,5-difluoro-4-methylethylene carbonate, 4-fluoro-5-methylethylene carbonate, 4,4-difluoro-5-methylethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoroethylene carbonate, 4-(fluoromethyl)-5-fluoroethylene carbonate, 4-fluoro-4,5-dimethylethylene carbonate, 4,5-difluoro-4,5-dimethylethylene carbonate, and 4,4-difluoro-5,5-dimethylethylene carbonate. Among them, monofluoroethylene carbonate, 4,4-difluoroethylene carbonate, and 4,5-difluoroethylene carbonate are preferred since these compounds provide high ionic conductivity to an electrolytic solution and readily form a stable interface protective coating film.

Fluorine-containing cyclic carbonates may be used singly, or two or more kinds thereof may be used together in any combination and ratio. The amount of fluorine-containing cyclic carbonate (or the total amount in the case of two or more kinds) in 100% by mass of a non-aqueous electrolytic solution is preferably 1.0 × 10⁻³% by mass or more, and more preferably 0.01% by mass or more, further preferably 0.1% by mass or more, still further preferably 0.5% by mass or more, particularly preferably 1% by mass or more, and most preferably 1.2% by mass or more, and preferably 10% by mass or less, more preferably 7% by mass or less, more preferably 5% by mass or less, particularly preferably 3% by mass or less, and most preferably 2% by mass or less. The content of a fluorine-containing cyclic carbonate when used as a non-aqueous solvent, in 100% by volume of the non-aqueous solvent, is preferably 1% by volume or more, more preferably 5% by volume or more, and further preferably 10% by volume or more, and is preferably 50% by volume or less, and more preferably 35% by volume or less, and further preferably 25% by volume or less.

The mass ratio (chain sulfonate ester/fluorine-containing cyclic carbonate) of the content of the above-described chain sulfonate ester to the content of a fluorine-containing cyclic carbonate (total amount in the case of two or more kinds) is usually 1/100 or more, and preferably 10/100 or more, more preferably 20/100 or more, and further preferably 25/100 or more, and is usually 10,000/100 or less, and preferably 500/100 or less, and more preferably 300/100 or less. When the mass ratio is in this range, energy device characteristics, especially durability characteristics, can be considerably improved. Although the principle behind this is not known, it is thought to be because mixing at this ratio minimizes a side reaction of an additive on an electrode.

When a non-aqueous electrolytic solution contains LiPF₆, the mass ratio (fluorine-containing cyclic carbonate/LiPF₆) of the total content of a fluorine-containing cyclic carbonate to the content of LiPF₆ is usually 0.00005 or more, preferably 0.001 or more, more preferably 0.01 or more, further preferably 0.02 or more, and particularly preferably 0.025 or more, and usually 0.5 or less, preferably 0.45 or less, more preferably 0.4 or less, and further preferably 0.35 or less. When the mass ratio is in this range, energy device characteristics, especially durability characteristics, can be considerably improved. Although the principle behind this is not known, it is thought to be because mixing at this ratio minimizes LiPF₆ decomposition side reaction in an energy device system.

### < 1-6. Manufacturing Method of Non-aqueous Electrolytic Solution >

A non-aqueous electrolytic solution can be prepared by dissolving an electrolyte, a chain sulfonate, at least one compound selected from the group consisting of a fluorosulfonate, a monofluorophosphate, a difluorophosphate, an imide salt, and an oxalate, and the above-described "auxiliary agents" as needed, in the above-described non-aqueous solvent.

When preparing a non-aqueous electrolytic solution, each raw material of the non-aqueous electrolytic solution such as an electrolyte such as a lithium salt; a non-aqueous solvent; a chain sulfonate ester; at least one compound selected from the group consisting of a fluorosulfonate, a monofluorophosphate, a difluorophosphate, an imide salt, and an oxalate; or an auxiliary agent is preferably dehydrated in advance. Regarding the degree of dehydration, it is desirable to dehydrate until the moisture content of raw materials is usually 50 ppm by mass or less, and preferably 30 ppm by mass or less.

By removing water from a non-aqueous electrolytic solution, electrolysis of water, reaction of water with lithium metal, hydrolysis of a lithium salt, and the like become more difficult to occur. A means of dehydration is not particularly restricted, and in the case of a liquid such as a non-aqueous solvent, for example, a desiccant agent such as a molecular sieve may be used. When an object to be dehydrated is a solid such as an electrolyte, the object may be dried by heating at a temperature lower than the temperature at which decomposition occurs.

### < 2. Energy Device Using Non-aqueous Electrolytic Solution >

An energy device using a non-aqueous electrolytic solution includes a plurality of electrodes capable of absorbing and releasing metal ions and the non-aqueous electrolytic solution described above. Specific examples of kinds of energy devices include a primary battery, a secondary battery, and a metal ion capacitor including a lithium-ion capacitor. Among them, a primary battery or a secondary battery is preferred, a secondary battery is more preferred, and a lithium secondary battery is especially preferred. These non-aqueous electrolytic solutions used for energy devices are also preferably so-called gel electrolytes, which are pseudo-solidified with a polymer, a filler, or the like. Non-aqueous electrolytic solution secondary batteries will be described below.

### < 2-1. Non-aqueous Electrolytic Solution Secondary Battery >

### < 2-1-1. Battery Configuration >

A non-aqueous electrolytic solution secondary battery has the same configuration as conventionally known non-aqueous electrolytic solution secondary batteries, except for the non-aqueous electrolytic solution, and normally has a configuration in which a positive electrode and a negative electrode are layered via a porous membrane (separator) impregnated with a non-aqueous electrolytic solution, and these are stored in a case (outer casing). Therefore, the shape of a non-aqueous electrolytic solution secondary battery is not particularly restricted, and may be cylindrical, rectangular, laminated, coin-shaped, large, or any other type.

### < 2-1-2. Non-aqueous Electrolytic Solution >

As the non-aqueous electrolytic solution, the above-described non-aqueous electrolytic solution is used. Another non-aqueous electrolytic solution can also be used by mixing the above-described non-aqueous electrolytic solution with another non-aqueous electrolytic solution without departing from the spirit of the invention according to the present embodiment.

### < 2-1-3. Negative Electrode >

The negative electrode active material used for a negative electrode is not particularly restricted as long as the material is capable of electrochemically absorbing and releasing metal ions. Examples thereof include a carbon material, a metal compound-based material, and a lithium-containing metal composite oxide material. The negative electrode active material may be used singly or in combination with one or more kinds thereof in any combination.

Among them, a carbon-based material and a metal compound-based material are preferred. Among metal compound-based materials, a material containing silicon are preferred. Therefore, as an anode active material, a carbonaceous material and a material containing silicon are particularly preferred.

### < 2-1-3-1. Carbon-based Material >

A carbon-based material used as a negative electrode active material is not particularly limited, and is preferably selected from (i) to (iv) below since a secondary battery with a good balance of initial irreversible capacity and high current density charge/discharge characteristics is provided.
(i) Natural graphite
(ii) Artificial carbonaceous material and carbonaceous materials obtained by heat-treating artificial graphite material at least once in the range of from 400°C to 3,200°C
(iii) Carbonaceous material wherein negative electrode active material layer is composed of carbonaceous material having at least two different crystallinities and/or has an interface at which the carbonaceous material of different crystallinities is in contact with each other
(iv) Carbonaceous material wherein negative electrode active material layer is composed of carbonaceous material having at least two different orientations and/or has an interface at which the carbonaceous material of different orientations is in contact with each other
One carbonaceous material from (i) to (iv) may be used singly, or two or more kinds thereof may be used together in any combination and ratio.

Specific examples of artificial carbonaceous material or artificial graphitic material in (ii) above include coal-based coke, petroleum-based coke, coal-based pitch, petroleum-based pitch, and oxidized of these or natural graphite;
needle coke, pitch coke, and a carbon material obtained by partially graphitizing these materials;
a thermally decomposed organic material such as furnace black, acetylene black, or pitch-based carbon fiber;
carbonizable organic material and a carbide thereof; and,
a solution carbide obtained by dissolving a carbonizable organic material in a low molecular weight organic solvent such as benzene, toluene, xylene, quinoline, or n-hexane.

All of the above-described carbon-based materials (i) to (iv) are conventionally known, and methods of manufacturing them are well known to those skilled in the art, and commercially available products thereof can also be purchased.

### < 2-1-3-2. Metal Compound-based Material >

A metal compound-based material used as a negative electrode active material is not particularly limited as long as the material contains a metal that can be alloyed with lithium, the form of the metal is not particularly limited as long as the metal can absorb and release metal ions such as lithium ion, for example, a single metal or alloy that forms an alloy with lithium, a compound such as an oxide, a carbide, a nitride, a silicide, a sulfide, a phosphide thereof, or the like can be used. Examples of such a metal compound-based material include a compound containing a metal such as Ag, Al, Ba, Bi, Cu, Ga, Ge, In, Ni, Pb, Sb, Si, Sn, Sr, or Zn. Among others, a material containing metallic and semi-metallic elements in group 13 or 14 of the periodic table (in other words, excluding carbon. Hereinafter, metals and semimetals are collectively referred to as "metals") is more preferable, and a single metal of silicon (Si), tin (Sn), or lead (Pb) (hereinafter, these three elements are sometimes referred to as "SSP metallic elements") or an alloy containing these atoms, or a compound of these metals (SSP metallic elements) is further preferable. The most preferred metal that can be alloyed with lithium is silicon. These may be used singly, or two or more kinds thereof may be used together in any combination and ratio.

### < 2-1-3-3. Lithium-containing Metal Composite Oxide Material >

A lithium-containing metal composite oxide material used as a negative electrode active material is not particularly limited as long as the material can absorb and release lithium, and a lithium-containing metal composite oxide material containing titanium is preferred, and a composite oxide of lithium and titanium (hereinafter, sometimes abbreviated as "lithium-titanium composite oxide") is particularly preferred. It is particularly preferable to use lithium-titanium composite oxide having a spinel structure in a negative electrode active material for lithium-ion non-aqueous electrolytic solution secondary battery since the output resistance of the secondary battery is greatly reduced.

Lithium or titanium in a lithium-titanium composite oxide is preferably replaced by at least one other metallic element selected from the group consisting of Na, K, Co, Al, Fe, Mg, Cr, Ga, Cu, Zn and Nb, for example.

Examples of a preferred lithium-titanium composite oxide as a negative electrode active material include a lithium-titanium composite oxide represented by the following general formula (2).

LiₓTi_{y}M_{z}O₄ (2)

(In general formula (2), M represents at least one element selected from the group consisting of Na, K, Co, Al, Fe, Mg, Cr, Ga, Cu, Zn, and Nb. In general formula (2), 0.7 ≤ x ≤ 1.5, 1.5 ≤ y ≤ 2.3, and 0 ≤ z ≤ 1.6 are preferred since the structure during doping and de-doping of a lithium ion is stable.)

### < 2-1-3-4. Configuration, Physical Properties, and Preparation Method of Negative Electrode >

Although known technical configurations can be adopted for a negative electrode containing the above-described active material and electrode making method, and a current collector, it is desirable that any one or more of the following items (I) to (VI) be satisfied at the same time.

### (I) Preparaiton of Negative Electrode

Any known method can also be used to manufacture a negative electrode, as long as this method does not considerably limit an effect of the invention. For example, a negative electrode can be manufactured by adding a binder, a solvent, and, if necessary, a thickening agent, a conductive material, a filler, and the like to a negative electrode active material to form a slurry-like negative electrode forming material, which is then applied to a current collector, dried, and pressed to form a negative electrode active material layer.

### (II) Current Collector

As a current collector to hold a negative electrode active material, any known material can be used. Examples of a negative electrode current collector include a metal material such as aluminum, copper, nickel, stainless steel, or nickel-plated steel, and copper is particularly preferred from the viewpoint of ease of processing and cost.

When the current collector is a metal material, examples of the shape of the current collector include metal foil, metal cylinder, metal coil, metal plate, metal thin film, expanded metal, punched metal, and foamed metal. Among them, a thin metal film and a metal foil are preferred. The shape is more preferably a copper foil, and further preferably a rolled copper foil by a rolling method and an electrolytic copper foil by an electrolytic method.

### (III) Thickness Ratio of Current Collector to Negative Electrode Active Material Layer

The thickness ratio of a current collector to a negative electrode active material layer is not limited, and the value of "(thickness of negative electrode active material layer on one side immediately before pouring process of non-aqueous electrolytic solution)/(thickness of current collector)" is preferably 150 or less, more preferably 20 or less, and particularly preferably 10 or less, and preferably 0.1 or more, more preferably 0.4 or more, and particularly preferably 1 or more.

When the thickness ratio of a current collector to a negative electrode active material layer exceeds the above-described range, a collector may generate heat due to Joule heat during charging and discharging at high current density of a secondary battery. When the ratio is below the above-described range, the volume ratio of a current collector to a negative electrode active material may increase, and the capacity of a secondary battery may decrease.

### (IV) Electrode Density

The structure of an electrode when a negative electrode active material is made into an electrode is not particularly limited, and the density of the negative electrode active material present on a current collector is preferably 1 g·cm⁻³ or more, more preferably 1.2 g·cm⁻³ or more, and further preferably 1.3 g·cm⁻³ or more, and preferably 4 g·cm⁻³ or less, more preferably 3 g·cm⁻³ or less, further preferably 2.5 g·cm⁻³ or less, and particularly preferably 1.7 g·cm⁻³ or less. When the density of the negative electrode active material on the current collector is within the above-described range, the negative electrode active material particles are less likely to be destroyed, making it easier to prevent an increase in initial irreversible capacity of a secondary battery or deterioration of high current density charge/discharge characteristics due to reduced penetration of a non-aqueous electrolytic solution near the current collector/negative electrode active material interface. Furthermore, conductivity between negative electrode active materials can be secured, and capacity per unit volume can be obtained without increasing the battery resistance.

### (V) Binder · Solvent and the like

Slurry for forming a negative electrode active material layer is usually prepared by adding a solvent mixed with a binder, a thickening agent, or the like to a negative electrode active material.

A binder that binds a negative electrode active material is not particularly restricted, as long as the material is stable to a non-aqueous electrolytic solution or a solvent used in electrode manufacturing.

Examples thereof include a resin polymer such as polyethylene, polypropylene, polyethylene terephthalate, polymethyl methacrylate, aromatic polyamide, cellulose, or nitrocellulose;
a rubber-like polymer such as SBR (styrene butadiene rubber), isoprene rubber, butadiene rubber, fluoro rubber, NBR (acrylonitrile-butadiene rubber), or ethylene-propylene rubber;
a thermoplastic elastomer-like polymer such as styrene-butadiene-styrene block copolymers or a hydrogenated product thereof, EPDM (ethylene-propylene-diene ternary copolymer), styrene-ethylene-butadiene-styrene copolymer, or a styrene-isoprene-styrene block copolymer, or a hydrogenated product thereof;
a soft resin-like polymer such as syndiotactic-1,2-polybutadiene, polyvinyl acetate, ethylene-vinyl acetate copolymer, or propylene-alpha-olefin copolymer;
a fluorinated polymer such as polyvinylidene fluoride, polytetrafluoroethylene, or a tetrafluoroethylene-ethylene copolymer; and
a polymer composition with ion conductivity of an alkali metal ion (especially lithium ion).

These may be used singly, or two or more kinds thereof may be used together in any combination and ratio.

The kind of solvent used to form a slurry is not particularly restricted, as long as the solvent is capable of dissolving or dispersing a negative electrode active material, a binder, and, if necessary, a thickening agent and conductive material used, and either an aqueous solvent or an organic solvent may be used.

Examples of the aqueous solvent include water and alcohol, and examples of the organic solvent include *N*-methylpyrrolidone (NMP), dimethylformamide, dimethylacetamide, methylethylketone, cyclohexanone, methyl acetate, methyl acrylate, diethyltriamine, *N*,*N*-dimethylaminopropylamine, tetrahydrofuran (THF), toluene, acetone, diethyl ether, dimethylacetamide, hexamethylphosfaramide, dimethylsulfoxide, benzene, xylene, quinoline, pyridine, methylnaphthalene, and hexane.

Particularly when an aqueous solvent is used, it is preferable to include a dispersing agent, or the like, together with a thickening agent, and slurry the mixture with a latex such as SBR.

These solvents may be used singly, or in combination of two or more in any combination and ratio.

The ratio of a binder to 100 parts by mass of a negative electrode active material is preferably 0.1 part by mass or more, more preferably 0.5 parts by mass or more, further preferably 0.6 parts by mass or more, and is preferably 20 parts by mass or less, more preferably 15 parts by mass or less, further preferably 10 parts by mass or less, and particularly preferably 8 parts by mass or less. When the ratio of a binder to a negative electrode active material is within the above-described range, the ratio of a binder that does not contribute to the battery capacity does not increase, thus making it difficult to cause a decrease in battery capacity. Furthermore, the strength of a negative electrode is also less likely to deteriorate.

In particular, when a slurry as a negative electrode forming material contains a rubber-like polymer represented by SBR as a main component, the ratio of a binder to 100 parts by mass of a negative electrode active material is preferably 0.1 parts by mass or more, more preferably 0.5 parts by mass or more, further preferably 0.6 parts by mass or more, and preferably 5 parts by mass or less, more preferably 3 parts by mass or less, and further preferably 2 parts by mass or less.

When a slurry contains a fluorinated polymer represented by polyvinylidene fluoride as a main component, the ratio of a binder to 100 parts by mass of a negative electrode active material is preferably 1 part by mass or more, more preferably 2 parts by mass, and further preferably 3 parts by mass, and preferably 15 parts by mass or less, more preferably 10 parts by mass or less, and further preferably 8 parts by mass or less.

A thickening agent is usually used to adjust the viscosity of a slurry. The thickening agent is not particularly restricted, and examples thereof include carboxymethyl cellulose, methyl cellulose, hydroxymethyl cellulose, ethyl cellulose, polyvinyl alcohol, oxidized starch, phosphorylated starch, casein, and a salt thereof. These may be used singly or in combination of two or more kinds thereof in any combination and ratio.

When a thickening agent is used, the ratio of the thickening agent to 100 parts by mass of a negative electrode active material is usually 0.1 parts by mass or more, and preferably 0.5 parts by mass or more, and more preferably 0.6 parts by mass or more. The above-described ratio is usually 5 parts by mass or less, and preferably 3 parts by mass or less, and more preferably 2 parts by mass or less. When the ratio of a thickening agent to a negative electrode active material is within the above-described range, the applicability of the slurry becomes favorable. Furthermore, the ratio of the negative electrode active material in the negative electrode active material layer will be appropriate, and a problem of reduced battery capacity or increased resistance between negative electrode active materials is less likely to occur.

### (VI) Area of Negative Electrode Plate

The area of a negative electrode (also referred to as "negative electrode plate") is not particularly limited, and a design in which the area of the negative electrode is slightly larger than that of the opposing positive electrode (also referred to as "positive electrode plate") in such a manner that the positive electrode plate does not protrude outward from the negative electrode plate is preferred. From the viewpoint of reducing cycle life when a secondary battery is repeatedly charged and discharged and degradation due to high temperature storage, it is preferable to keep the area as close as possible to an area equal to a positive electrode, since this will increase the proportion of electrodes that work more uniformly and effectively and improve the characteristics of the battery. In particular, when a secondary battery is used at high current, such a design of the area of a negative electrode plate is important.

### < 2-1-4. Positive Electrode >

The following is a description of a positive electrode used in a non-aqueous electrolytic solution secondary battery.

### < 2-1-4-1. Positive Electrode Active Material >

The following is a description of a positive electrode active material used in the above-described positive electrode.

### (1) Composition

A positive electrode active material is not particularly restricted as long as the material is electrochemically capable of absorbing and releasing metal ions, and for example, a material that is electrochemically capable of absorbing and releasing lithium ions is preferred, and a material that contains lithium and at least one transition metal is preferred. Examples thereof include a lithium transition metal composite oxide, a lithium-containing transition metal phosphate compound, a lithium-containing transition metal silicate compound, and a lithium-containing transition metal boric acid compound.

As transition metals in the above-described lithium transition metal composite oxides, V, Ti, Cr, Mn, Fe, Co, Ni, Cu, and the like are preferred, examples of the above-described lithium transition metal composite oxides include a lithium-cobalt composite oxide such as LiCoO₂; a lithium-nickel composite oxide such as LiNiO₂; a lithium manganese composite oxide such as LiMnO₂, LiMn₂O₄, or Li₂MnO₄; and those in which main transition metal atoms of these lithium transition metal composite oxides are partially substituted with other metals such as Al, Ti, V, Cr, Mn, Fe, Co, Li, Ni, Cu, Zn, Mg, Ga, Zr, Si, Nb, Mo, Sn, or W.

Examples of those substituted include LiNi_{0.5}Mn_{0.5}O₂, LiNi_{0.85}Co_{0.10}Al_{0.05}O₂, LiNi_{0.33}Co_{0.33}Mn_{0.33}O₂, LiMn_{1.8}Al_{0.2}O₄, Li_{1.1}Mn_{1.9}Al_{0.1}O₄, and LiMn_{1.5}Ni_{0.5}O₄.

Among them, a lithium transition metal composite oxide containing lithium, nickel, and cobalt is more preferred. This is because a lithium transition metal composite oxide containing cobalt and nickel can have a larger capacity when used at the same potential.

On the other hand, since cobalt is an expensive metal with few resources and the amount of active material used in large batteries that require high capacity, such as for automotive applications, is not favorable from the viewpoint of cost, it is also desirable to use manganese as a main component, which is an inexpensive transition metal. In other words, lithium-nickel-cobalt-manganese composite oxide is particularly preferred.

In view of stability as a compound and procurement cost due to ease of production, a lithium-manganese composite oxide with a spinel-type structure and a lithium-manganese composite oxide in which manganese is partially substituted are also preferred. In other words, preferable specific examples of the above-described examples also include LiMn₂O₄, LiMn_{1.8}Al_{0.2}O₄, Li_{1.1}Mn_{1.9}Al_{0.1}O₄, and LiMn_{1.5}Ni_{0.5}O₄.

As a transition metal in the above-described lithium-containing transition metal phosphate compound, V, Ti, Cr, Mn, Fe, Co, Ni, Cu, or the like is preferred, and specific examples of the above-described lithium-containing transition metal phosphate compound include an iron phosphate such as LiFePO₄, Li₃Fe₂(PO4)₃, or LiFeP₂O₇; a cobalt phosphate such as LiCoPO₄; a manganese phosphate such as LiMnPO₄; and one in which the main transition metal atoms of these lithium-containing transition metal phosphate compounds are partially substituted with other metals such as Al, Ti, V, Cr, Mn, Fe, Co, Li, Ni, Cu, Zn, Mg, Ga, Zr, Si, Nb, Mo, Sn, or W.

Among these, an iron phosphate (lithium iron phosphate compound) is preferred since iron is an extremely inexpensive metal with abundant resources, and is less toxic. In other words, a more preferred specific example of the above-described specific examples is LiFePO₄.

As a transition metal in the above-described lithium-containing transition metal silicate compounds, V, Ti, Cr, Mn, Fe, Co, Ni, Cu, or the like is preferred, and examples of the above-described lithium-containing transition metal silicate compounds include an iron silicate such as Li₂FeSiO₄; a cobalt silicate such as Li₂CoSiO₄; and one in which the main transition metal atoms of these lithium-containing transition metal silicate compounds are partially substituted with other metals such as Al, Ti, V, Cr, Mn, Fe, Co, Li, Ni, Cu, Zn, Mg, Ga, Zr, Si, Nb, Mo, Sn, or W.

As a transition metal in the above-described lithium-containing transition metal borate compounds, V, Ti, Cr, Mn, Fe, Co, Ni, Cu, or the like is preferred, and specific examples of the above-described lithium-containing transition metal borate compounds include an iron borate such as LiFeBO₃; a cobalt borate such as LiCoBO₃; and one in which the main transition metal atoms of these lithium-containing transition metal boric acid compounds are partially substituted with other metals such as Al, Ti, V, Cr, Mn, Fe, Co, Li, Ni, Cu, Zn, Mg, Ga, Zr, Si, Nb, Mo, Sn, or W.

As a positive electrode active material contained in a positive electrode used in a non-aqueous electrolytic solution secondary battery, a lithium transition metal composite oxide represented by Composition Formula (14) is preferred from the viewpoint of positive electrode capacity.

Liₐ₁Ni_{b1}Co_{c1}M_{d1}O₂ ··· (14)

(In Formula (14), a1, b1, c1, and d1 are numerical values of 0.90 ≤ a1 ≤ 1.10, 0.50 ≤ b1 ≤ 0.98, 0.01 ≤ c1 < 0.50, and 0.01 ≤ d1< 0.50, respectively, and b1 + c1 + d1 = 1 is satisfied. M represents at least one element selected from the group consisting of Mn, Al, Mg, Zr, Fe, Ti, and Er.

Suitable specific examples of a lithium transition metal composite oxide represented by Composition Formula (14) include LiNi_{0.85}Co_{0.10}Al_{0.05}O₂, LiNi_{0.80}Co_{0.15}Al_{0.05}O₂, LiNi_{0.5}Co_{0.2}Mn_{0.3}O₂, Li_{1.05}Ni_{0.50}Mn_{0.29}Co_{0.21}O₂, LiNi_{0.6}Co_{0.2}Mn_{0.2}O₂, and LiNi_{0.8}Co_{0.1}Mn_{0.1}O₂.

From the viewpoint of improved electrochemical stability and longer battery life, of transition metal composite oxides represented by composition formula (14), transition metal composite oxides represented by the following composition formula (15) are more preferred.

Liₐ₂Ni_{b2}Co_{c2}M_{d2}O₂ ··· (15)

(In Formula (15), a2, b2, c2, and d2 represent numerical values of 0.90 ≤ a2 ≤ 1.10, 0.50 ≤ b2 ≤ 0.90, 0.05 ≤ c2 ≤ 0.30, and 0.05 ≤ d2 ≤ 0.30, respectively, and b2 + c2 + d2 = 1 is satisfied. M represents at least one element selected from the group consisting of Mn, Al, Mg, Zr, Fe, Ti, and Er.)

Since chemical stability is also improved and a phase transition due to side reactions on the surface of an oxide is suppressed, from the viewpoint of not interfering with an action of a chain sulfonate ester and an insoluble composite film composed of a fluorosulfonate, a monofluorophosphate, a difluorophosphate, an imide salt, or an oxalate, of transition metal composite oxides represented by composition formula (14), transition metal composite oxides represented by Composition Formula (16) below are further preferred.

Liₐ₃Ni_{b3}Co_{c3}M_{d3}O₂ ··· (16)

(In Formula (16), a3, b3, c3, and d3 represent numerical values of 0.90 ≤ a3 ≤ 1.10, 0.50 ≤ b3 ≤ 0.90, 0.10 ≤ c3 ≤ 0.30, and 0.10 ≤ d3 ≤ 0.30, respectively, and b3 + c3 + d3 = 1 is satisfied. M represents at least one element selected from the group consisting of Mn, Al, Mg, Zr, Fe, Ti, and Er.)

Suitable specific examples of a lithium transition metal oxide represented by Composition Formula (16) include LiNi_{0.5}Co_{0.2}Mn_{0.3}O₂, Li_{1.05}Ni_{0.50}Mn_{0.29}Co_{0.21}O₂, LiNi_{0.6}Co_{0.2}Mn_{0.2}O₂, and LiNi_{0.8}Co_{0.1}Mn_{0.1}O₂.

From the viewpoint of superior positive electrode capacity and electrochemical and chemical stability, of transition metal composite oxides represented by Composition Formula (14), a transition metal composite oxide represented by Composition Formula (17) below is particularly preferable.

Liₐ₄Ni_{b4}Co_{c4}M_{d4}O₂ ... (17)

(In Formula (17), a4, b4, c4, and d4 represent numerical values of 0.90 ≤ a4 ≤ 1.10, 0.55 ≤ b4 ≤ 0.90, 0.10 ≤ c4 ≤ 0.30, and 0.10 ≤ d4 ≤ 0.30, respectively, and b4 + c4 + d4 = 1 is satisfied. M represents at least one element selected from the group consisting of Mn, Al, Mg, Zr, Fe, Ti, and Er.)

In Composition Formulas (14) to (17), M preferably contains Mn or Al, and M is preferably Mn or Al. This is because the structural stability of a transition metal composite oxide is increased and structural degradation is suppressed after repeated charging and discharging. Among others, Mn is further preferred as M.

Two or more of the above-described positive electrode active materials may be mixed together. Similarly, at least one or more of the above-described positive electrode active materials may be mixed with another positive electrode active material. Examples of the other positive electrode active material include a transition metal oxide, a transition metal phosphate compound, a transition metal silicate compound, and a transition metal boric acid compound not listed above.

When two or more of positive electrode active materials are mixed together, lithium-manganese composite oxide with spinel-type structure or lithium-containing transition metal phosphate compound with olivine-type structure, as described above, are preferred.

As a transition metal in lithium-containing transition metal phosphate compounds, those described above can be used. The same applies to a preferred aspect.

### (2) Method of Manufacturing Positive Electrode Active Material

The method of manufacturing a positive electrode active material is not particularly restricted to the extent that the method does not exceed the gist of the invention according to the present embodiment, and examples thereof include several methods, and a general method for manufacturing inorganic compounds is used.

In particular, a variety of methods can be considered for producing spherical or ellipsoidal active materials, and one example is to dissolve or pulverize and disperse a transition metal raw material such as transition metal nitrate or sulfate and, if necessary, a raw material of another element in a solvent such as water, prepare and collect a spherical precursor by adjusting the pH while stirring, dry the precursor as necessary, add a Li source such as LiOH, Li₂CO₃, or LiNO₃, and then calcinate them at high temperature to obtain a positive electrode active material.

As an example of another method, a transition metal raw material such as a transition metal nitrate, a sulfate, a hydroxide, or an oxide, and a raw material of another element, if necessary, are dissolved or pulverized and dispersed in a solvent such as water, and then dried and molded using a spray dryer to form a spherical or oval sphere-shaped precursor, to which a Li source such as LiOH, Li₂CO₃, or LiNO₃ is added and calcined at a high temperature to obtain a positive electrode active material.

In still another example of the method, a transition metal raw material such as transition metal nitrate, sulfate, hydroxide, or oxide, a Li source such as LiOH, Li₂CO₃, or LiNO₃, and a raw material of another element, if necessary, are dissolved or pulverized and dispersed in a solvent such as water, dried and molded with a spray dryer to form a spherical or oval-shaped precursor, which is then calcined at a high temperature to obtain a positive electrode active material.

### < 2-1-4-2. Positive Electrode Structure and Preparation Method >

In the following, the configuration of a positive electrode and a preparation method thereof will be described.

### (Preparation Method of Positive Electrode)

A positive electrode using a positive electrode active material can be prepared by any known method. A positive electrode is usually prepared by forming a positive electrode active material layer, which contains a positive electrode active material particle and a binder, on a current collector. More specifically, for example, a positive electrode can be obtained by forming a positive electrode active material layer on a current collector either by dry mixing a positive electrode active material, a binder, and, if necessary, a conductive material, and a thickening agent, in sheet form, and pressing the sheet onto a positive electrode collector, or by dissolving or dispersing these materials in a liquid medium to form a slurry, applying the slurry to a positive electrode collector, and then drying the slurry.

The content of a positive electrode active material in a positive electrode active material layer is preferably 60% by mass or more, more preferably 70% by mass or more, and further preferably 80% by mass or more, and preferably 99.9% by mass or less, and more preferably 99% by mass or less. When the content of a positive electrode active material is within the above-described range, the electrical capacity of a non-aqueous electrolytic solution secondary battery can be sufficiently secured. Furthermore, the strength of a positive electrode is also sufficient. Positive electrode active material powder may be used singly, or two or more kinds thereof of different compositions or different powder properties may be used together in any combination and ratio. When combining two or more kinds of active materials, it is preferable to use the above-described composite oxide containing lithium and manganese as a component of a powder. This is because, as described above, cobalt or nickel is an expensive metal with few resources, and use of an active material in large batteries requiring high capacity, such as for automotive applications, is not favorable from the viewpoint of cost since the amount of the active material used is large, and therefore it is desirable to use manganese as the main component.

### (Conductive Material)

As a conductive material, any known conductive material can be used. Specific examples thereof include a metal material such as copper or nickel; graphite (graphite) such as natural graphite or artificial graphite; carbon black such as acetylene black; and a carbonaceous material such as needle coke. These may be used singly, or two or more kinds thereof may be used together in any combination and ratio.

The content of a conductive material in a positive electrode active material layer is preferably 0.01% by mass or more, more preferably 0.1 % by mass or more, and further preferably 1% by mass or more, and preferably 50% by mass or less, more preferably 30% by mass or less, and further preferably 15% by mass or less. When the content of a conductive material is within the above-described range, the conductivity can be sufficiently ensured. Furthermore, a decrease in battery capacity is also easily prevented.

### (Binder)

A binder used in production of a positive electrode active material layer is not particularly limited as long as the binder is a material that is stable against a non-aqueous electrolytic solution or a solvent used in production of an electrode.

When a positive electrode is prepared by coating method, a binder is not particularly limited as long as the binder is a material that can be dissolved or dispersed in a liquid medium used during electrode production, examples thereof include a resin polymer such as polyethylene, polypropylene, polyethylene terephthalate, polymethyl methacrylate, aromatic polyamide, cellulose, or nitrocellulose;
a rubber-like polymer such as SBR (styrene butadiene rubber), NBR (acrylonitrile-butadiene rubber), fluoro rubber, isoprene rubber, butadiene rubber, or ethylene-propylene rubber;
a thermoplastic elastomer-like polymer such as styrene-butadiene-styrene block copolymers or a hydrogenated product thereof, EPDM (ethylene-propylene-diene ternary copolymer), styrene-ethylene-butadiene-ethylene copolymer, or a styrene-isoprene-styrene block copolymer, or a hydrogenated product thereof;
a soft resin-like polymer such as syndiotactic-1,2-polybutadiene, polyvinyl acetate, ethylene-vinyl acetate copolymer, or propylene-alpha-olefin copolymer;
a fluorinated polymer such as polyvinylidene fluoride (PVDF), polytetrafluoroethylene, or a tetrafluoroethylene-ethylene copolymer; and
a polymer composition with ion conductivity of an alkali metal ion (especially lithium ion).

The binders may be used singly, or two or more kinds thereof may be used together in any combination and ratio.

The content of a binder in a positive electrode active material layer is preferably 0.1% by mass or more, more preferably 1% by mass or more, and further preferably 3% by mass or more, and preferably 80% by mass or less, more preferably 60% by mass or less, further preferably 40% by mass or less, and particularly preferably 10% by mass or less. When the content of a binder is within the above-described range, sufficient positive electrode active material can be retained and mechanical strength of a positive electrode can be secured, resulting in favorable battery performance such as cycle characteristics. This also leads to avoiding a decrease in battery capacity and conductivity.

### (Liquid Medium)

A liquid medium used to prepare a slurry for forming a positive electrode active material layer is not particularly restricted as long as the solvent is a solvent capable of dissolving or dispersing a positive electrode active material, a conductive material, a binder, and a thickening agent used as needed.

Examples of the above-described aqueous solvent include water and a mixture of alcohol and water. Examples of the above-described organic solvent include an aliphatic hydrocarbon such as hexane;
an aromatic hydrocarbon such as benzene, toluene, xylene, or methylnaphthalene;
a heterocyclic compound such as quinoline or pyridine;
a ketone such as acetone, methyl ethyl ketone, or cyclohexanone;
an ester such as methyl acetate or methyl acrylate;
an amine such as diethylenetriamine or N,N-dimethylaminopropylamine;
an ether such as diethyl ether or tetrahydrofuran (THF);
an amide such as N-methylpyrrolidone (NMP), dimethylformamide, or dimethylacetamide; and
a non-protonic polar solvent such as hexamethylphospharamide or dimethyl sulfoxide.

These may be used singly, or two or more kinds thereof may be used in any combination and ratio.

### (Thickening Agent)

When an aqueous medium is used as a liquid medium to form a slurry, it is preferable to slurry with a thickening agent and a latex such as styrene-butadiene rubber (SBR). A thickening agent is usually used to adjust the viscosity of a slurry.

A thickening agent is not restricted as long as the thickening agent does not considerably restrict an effect of the invention according to the present embodiment, and specific examples thereof include carboxymethyl cellulose, methyl cellulose, hydroxymethyl cellulose, ethyl cellulose, polyvinyl alcohol, oxidized starch, phosphorylated starch, casein, and a salt thereof. These may be used singly, or in combination of two or more kinds thereof in any combination and ratio.

When a thickening agent is used, the ratio of a thickening agent to the total mass of a positive electrode active material and a thickening agent is preferably 0.1% by mass or more, more preferably 0.5% by mass or more, and further preferably 0.6% by mass or more, and preferably 5% by mass or less, more preferably 3% by mass or less, and further preferably 2% by mass or less. When the ratio of a thickening agent is within the above-described range, the applicability of a slurry becomes favorable, and furthermore, the ratio of an active material in a positive electrode active material layer becomes sufficient, which makes it easier to avoid a problem of a decrease in capacity of a secondary battery and an increase in resistance between positive electrode active materials.

### (Compaction)

In order to increase the packing density of a positive electrode active material, a positive electrode active material layer obtained by applying and drying the above-described slurry on a current collector is preferably compacted by a hand press, a roller press, or the like. The density of a positive electrode active material layer is preferably 1 g·cm⁻³ or more, further preferably 1.5 g·cm⁻³ or more, particularly preferably 2 g·cm⁻³ or more, and preferably 4 g·cm⁻³ or less, further preferably 3.5 g·cm⁻³ or less, and particularly preferably 3 g·cm⁻³ or less.

When the density of a positive electrode active material layer is within the above-described range, the penetration of a non-aqueous electrolytic solution in the vicinity of the current collector/active material interface does not deteriorate, resulting in favorable charge/discharge characteristics, particularly at high current densities in secondary batteries. Furthermore, conductivity between active materials is less likely to decrease, and battery resistance is less likely to increase.

### (Current Collector)

The material of a positive electrode current collector is not particularly restricted, and any known material can be used. Specific examples thereof include a metal material such as aluminum, stainless steel, nickel plating, titanium, or tantalum; a carbonaceous material such as carbon cloth or carbon paper. Among them, a metal material, in particular aluminum, is preferred.

In the case of a metal material, examples of the shape of a current collector include metal foil, metal cylinder, metal coil, metal plate, metal thin film, expanded metal, punched metal, and foamed metal, and in the case of a carbonaceous material, examples of the shape of the current collector include carbon plate, carbon thin film, and carbon cylinder. Among them, metal foil or thin metal film is preferred. The metal foil and thin film may be formed into a mesh as appropriate.

The thickness of a current collector is any thickness, and is preferably 1 µm or more, more preferably 3 µm or more, and further preferably 5 µm or more, and preferably 1 mm or less, more preferably 100 µm or less, and further preferably 50 µm or less. When the thickness of a current collector is within the above-described range, sufficient strength needed as a current collector can be secured. Furthermore, the handleability is also favorable.

The ratio of the thickness of a positive electrode active material layer to the thickness of a current collector is not particularly limited, and the ratio (thickness of active material layer on one side immediately before pouring non-aqueous electrolytic solution)/(thickness of current collector) is preferably 150 or less, more preferably 20 or less, particularly preferably 10 or less, and preferably 0.1 or more, more preferably 0.4 or more, and particularly preferably 1 or more.

When the ratio of the thickness of a current collector to that of a positive electrode active material layer is within the above-described range, the current collector is less likely to generate heat due to Joule heat during high current density charging and discharging of a secondary battery. Furthermore, the volume ratio of the current collector to the positive electrode active material is less likely to increase, preventing a decrease in battery capacity.

### (Electrode Area)

From the viewpoint of high output and stability at high temperatures, the area of a positive electrode active material layer is preferably large in relation to the outer surface area of a battery outer packaging case. Specifically, the total electrode area of the above-described positive electrode relative to the surface area of an outer packaging of a non-aqueous electrolytic solution secondary battery in area ratio is preferably 20 times or more, and more preferably 40 times or more. In the case of a bottomed rectangular shape, the outer surface area of an outer packaging case refers to the total area calculated from the dimensions of the length, the width, and the thickness of a case portion filled with a power generating element, excluding a protrusion on a terminal. In the case of a bottomed cylindrical shape, the outer surface area refers to the geometric surface area that approximates a case portion filled with power generation elements as a cylinder, excluding a protruding portion of a terminal. The total electrode area of a positive electrode is the geometric surface area of a positive electrode composite layer opposite a composite layer containing a negative electrode active material, and in the case of a structure composed of a positive electrode composite layer on both sides via a current collector foil, the total area is the sum of the areas calculated for each side separately.

### (Discharge Capacity)

When a non-aqueous electrolytic solution is used, a battery element having an electric capacity (electric capacity when a battery is discharged from the fully charged state to the discharged state) of 1 ampere-hour (Ah) or more in a single battery casing of a non-aqueous electrolytic solution secondary battery is preferred since an improvement effect of low-temperature discharge characteristics is large. Therefore, a positive electrode plate is designed in such a manner that the discharge capacity is preferably 3 Ah (ampere-hours) or more, more preferably 4 Ah or more, and preferably 20 Ah or less, more preferably 10 Ah or less, on a full charge.

The discharge capacity is within the above-described range, a voltage drop due to electrode reaction resistance during high current extraction is not too large, and deterioration of power efficiency can be prevented. Furthermore, the temperature distribution due to internal heat generation during pulse charging/discharging does not become too large, resulting in poor durability for repeated charging/discharging, and poor heat dissipation efficiency against sudden heat generation during abnormal conditions such as overcharge or internal short circuit can also be avoided.

### (Thickness of Positive Electrode Plate)

The thickness of a positive electrode plate is not particularly limited, and from the viewpoint of high capacity, high output, and high rate characteristics, the thickness of a positive electrode active material layer, which is obtained by subtracting the thickness of a current collector from that of the positive electrode plate, is preferably 10 µm or more, more preferably 20 µm or more, and preferably 200 µm or less, more preferably 100 µm or less, for one side of a current collector.

### < 2-1-5. Separator >

In a non-aqueous electrolytic solution secondary battery, a separator is usually interposed between a positive electrode and a negative electrode to prevent short circuits. In this case, the non-aqueous electrolytic solution is usually impregnated into this separator.

The material or the shape of a separator is not particularly restricted, and any known material can be employed as long as the separator does not considerably impair an effect of the invention according to the present embodiment. Among them, a resin, a glass fiber, an inorganic material, or the like formed of a material stable to a non-aqueous electrolytic solution is preferably used, and a porous sheet or a nonwoven fabric form with excellent liquid retention properties is preferably used.

### < 2-1-6. Battery Design >

### (Electrode Group)

An electrode group may have either a layered structure composed of the above-described positive electrode plate and negative electrode plate via the above-described separator, or a spirally wound structure composed of the above-described positive electrode plate and negative electrode plate via the above-described separator. The ratio of the volume of an electrode group to the internal volume of a battery (hereinafter, referred to as "electrode group occupancy ratio") is preferably 40% or more, and more preferably 50% or more, and preferably 95% or less, and more preferably 90% or less. When the electrode group occupancy ratio is within the above-described range, the battery capacity is less likely to become small. When adequate void space is secured, cases in which the internal pressure increases due to expansion of components or the vapor pressure of liquid components of a non-aqueous electrolytic solution when a battery is heated to high temperatures, resulting in deterioration of a variety of characteristics such as charge/discharge repetitive performance and high temperature storage characteristics as a secondary battery, and further cases in which a gas release valve that releases the internal pressure to the outside is activated can be avoided.

### (Current Collection Structure)

A current collection structure is not particularly limited, and in order to more effectively improve discharge characteristics with a non-aqueous electrolytic solution, it is preferable to use a structure that reduces the resistance of a wiring portion or a junction portion. When internal resistance is reduced in such a manner, an effect of using a non-aqueous electrolytic solution is particularly favorably exhibited.

In the case of an electrode group having the above-described layered structure, a structure formed by bundling metal core portions of respective electrode layers and welding these portions to a terminal is suitably used. When the electrode area of a single electrode is large, the internal resistance becomes large, and therefore, it is also suitable to provide a plurality of terminals in an electrode to reduce the resistance. When an electrode group has the above-described wound structure, the internal resistance can be lowered by providing a plurality of lead structures in each of a positive electrode and a negative electrode and bundling these structures to a terminal.

### (Protection Element)

Examples of a protection element include a positive temperature coefficient (PTC) element whose resistance increases with heat generation due to excessive current or the like, a thermal fuse, a thermistor, and a valve (current shutoff valve) that shuts off current flowing into a circuit due to a sudden increase in internal battery pressure or temperature when abnormal heat generation occurs. It is preferable to select a protective element that does not operate under conditions of normal use at high currents, and it is more preferable to design a battery that does not generate abnormal heat or lead to thermal runaway even without a protective element.

### (Outer Casing)

A Non-aqueous electrolytic solution secondary battery is usually composed of the above-described non-aqueous electrolytic solution, a negative electrode, a positive electrode, a separator, and the like in an outer casing (outer packaging case). The outer casing is not limited, and any known outer casing can be adopted as long as an effect of the invention according to the present embodiment is not considerably impaired.

The material of an outer packaging case is not particularly limited as long as the material is stable to a non-aqueous electrolytic solution used. Specific examples thereof include a nickel-plated steel sheet, a stainless steel, an aluminum or aluminum alloy, a magnesium alloy, a metal such as nickel or titanium, or a layered film (laminated film) composed of a resin and an aluminum foil. From the viewpoint of weight reduction, a metal of aluminum or aluminum alloy or a laminated film is suitably used.

Examples of the outer packaging case using the above-described metal include those that have a hermetically sealed structure by welding metals together using laser welding, resistance welding, or ultrasonic welding, or those that have a welded structure using the above-described metals via a resin gasket. Examples of an outer packaging case using the above-described laminated film include one in which resin layers are thermally fused to each other to form a sealed and hermetically sealed structure. In order to improve sealing performance, a resin different from that used for a laminated film may be interposed between the above-described resin layers. In particular, when resin layers are thermally bonded via current-collecting terminals to form a hermetically sealed structure, resins with polar groups or modified resins with polar groups are suitably used as intervening resins since a metal and a resin are bonded together.

The shape of an outer packaging case is also any shape, and may be, for example, cylindrical-type, rectangular-type, laminated-type, coin-shaped, or large type. Examples

The present invention is further described in detail below with Examples and Comparative Examples, but the present invention is not limited to these Examples unless exceeding the gist thereof.

The compounds used in the present Examples and Comparative Examples are described below.

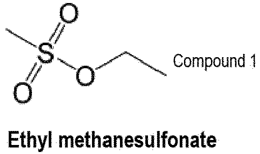

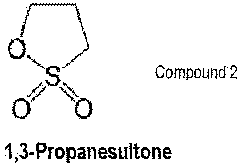

### < Examples 1-1 to 1-5, Comparative Examples 1-1 to 1-7 >

### [Examples 1-1 to 1-5]

### [Preparation of Non-aqueous Electrolytic Solution]

Non-aqueous electrolytic solutions for Examples 1-1 to 1-5 were prepared by adjusting a mixed solvent (mixing volume ratio of 2:4:4) composed of ethylene carbonate (also referred to as "EC"), ethyl methyl carbonate (also referred to as "EMC"), and dimethyl carbonate (also referred to as "DMC") with LiPF₆ as an electrolyte, vinylene carbonate (also referred to as "VC") as an additive, Compound 1 as a chain lithium sulfonate, and lithium fluorsulfonate (LiFSO₃) as a fluorosulfonate, under a dry argon atmosphere, to the concentrations shown in Table 1. "Content (% by mass)" in the table is the content when the total content of each non-aqueous electrolytic solution is 100% by mass. In Table 1, "mass ratio" indicates the mass ratio of the content of sulfonate ester (Compound 1 or Compound 2) to the content of lithium fluorosulfonate, expressed as a ratio with the total content of sulfonate ester (Compound 1 or Compound 2) and lithium fluorosulfonate as 100. For example, Example 1-1 was calculated using the following Formula.

### Example 1-1: {1/(1 + 0.002) × 100}/{0.002/(1 + 0.002) × 100} = 99.80/0.20

### [Preparation of Positive Electrode]

94% by mass of lithium cobalt nickel manganese oxide (LiNi_{0.6}Co_{0.2}Mn_{0.2}O₂) as a positive electrode active material, 3% by mass of acetylene black as a conductive material, and 3% by mass of polyvinylidene fluoride (PVdF) as a binder were mixed in *N-*methylpyrrolidone solvent by a disperser to make a slurry. This was uniformly applied to one side of a 15 µm thick aluminum foil, dried, and pressed to make a positive electrode.

### [Preparation of Negative Electrode]

Amorphous coated graphite powder as a negative electrode active material, aqueous dispersion of sodium carboxymethylcellulose (the concentration of sodium carboxymethylcellulose is 1% by mass) as a thickening agent, and aqueous dispersion of styrene butadiene rubber (concentration of styrene butadiene rubber is 50% by mass) as a binder were added and mixed by a disperser to make a slurry. This slurry was uniformly applied to one side of a 10 µm thick copper foil, dried, and pressed to form a negative electrode. The negative electrode was prepared in such a manner that the mass ratio of natural graphite: sodium carboxymethylcellulose: styrene butadiene rubber = 98:1:1 after drying.

### [Preparation of Lithium Secondary Battery]

A battery element was prepared by layering the above-described positive electrode, negative electrode, and polypropylene separator in the order of negative electrode, separator, positive electrode, separator, and negative electrode. The battery element was inserted into a bag composed of a laminated film coated with a resin layer on both sides of aluminum (40 µm thick) in such a manner that terminals of a positive electrode and a negative electrode protrude, and then a non-aqueous electrolytic solution was injected into the bag and vacuum-sealed to prepare a sheet-type lithium secondary battery.

### [Initial Conditioning]

A lithium secondary battery under pressure sandwiched between glass plates was charged at a current equivalent to 0.05C at 25°C for 10 hours at constant current, and then discharged at 0.2C at constant current up to 2.8V Further, after constant current-constant voltage charging (also referred to as "CC-CV charging") to 4.1V with a current corresponding to 0.2C (cut by 0.05C), the battery was left at 60°C for 24 hours. After the battery was sufficiently cooled, the battery was discharged to 2.8V with a constant current of 0.2C. Then, after CC-CV charging (cut by 0.05C) to 4.3V at 0.2C, the battery was discharged again to 2.8V at 0.2C to stabilize the initial battery characteristics.

Here, 1C represents a current value at which the reference capacity of a battery is discharged in one hour, and for example, 0.2C represents 1/5 of that current value. The same applies hereafter.

### [Initial Discharge Resistance Evaluation Test]

A lithium secondary battery subjected to an initial conditioning was CC-CV charged (cut by 0.05C) at 0.2C to 3.72V at 25°C, and then discharged at a current of 1C for 10 seconds. From the difference between the battery voltage before discharging and the voltage immediately after 10 seconds of discharging (at the point of 10-second discharge from the start of discharge), resistance was calculated according to Ohm's law R (resistance) = V (voltage)/I (current), and this was used as the initial normal temperature discharge resistance.

Furthermore, a discharge was performed at -20°C for 10 seconds at a current of 1C, and from the difference between the battery voltage before discharging and the voltage immediately after 10 seconds of discharging (at the point of 10-second discharging from the start of discharge), resistance was calculated according to Ohm's law R (resistance) = V (voltage)/I (current), and this was used as the initial low temperature discharge resistance.

### [High Temperature Storage Durability Test]

A lithium secondary battery subjected to an initial discharge resistance evaluation test was CC-CV charged (0.05C cut) at 0.2C to 4.3V at 25°C, and then stored at a high temperature at 60°C for 14 days. Then, after the battery was sufficiently cooled, the battery was discharged to 2.8V at a constant current of 0.2C at 25°C. Then, after CC-CV charging (0.05C cut) to 4.3V at 0.2C, the battery was discharged again to 2.8V at 0.2C.

### [Discharge Resistance Evaluation Test after High Temperature Storage]

A lithium secondary battery subjected to a high temperature storage durability test was CC-CV charged (cut by 0.05C) at 0.2C to 3.72V at 25°C, and then discharged at a current of 1C for 10 seconds. From the difference between the battery voltage before discharging and the voltage immediately after discharging for 10 seconds at this time, the resistance was calculated according to Ohm's law R (resistance) = V (voltage)/I (current), and this was used as the normal temperature discharge resistance after storage. Furthermore, the ratio (normal temperature discharge resistance after storage divided by initial normal temperature discharge resistance) of normal temperature discharge resistance after storage to initial normal temperature discharge resistance was determined, and this was used as the normal temperature discharge resistance increase rate (%).

Discharging was performed at -20°C for 10 seconds at a current of 1C, and from the difference between the battery voltage before discharging and the voltage immediately after discharging for 10 seconds at this time, the resistance was calculated according to Ohm's law R (resistance) = V (voltage)/I (current), and this was used as the low temperature discharge resistance after storage. Furthermore, the ratio (low temperature discharge resistance after storage divided by initial low temperature discharge resistance) of low temperature discharge resistance after storage to initial low temperature discharge resistance was determined, and this was used as the low temperature discharge resistance increase rate (%).

By using the above-described prepared lithium secondary battery, the above-described initial conditioning, initial discharge resistance evaluation test, high temperature storage durability test, and discharge resistance evaluation test after high temperature storage were conducted. The evaluation results are shown in Table 1 as relative values when Comparative Example 1-1 described below is set to 100.00%. The same applies to Comparative Examples 1-2 to 1-7 below.

### [Comparative Example 1-1]

A non-aqueous electrolytic solution of Comparative Example 1-1 was prepared in the same manner as in Example 1-1, except that Compound 1 and lithium fluorosulfonate were not added in the electrolytic solution of Example 1-1. A lithium secondary battery was prepared in the same manner as in Example 1-1, except that the non-aqueous electrolytic solution of Comparative Example 1-1 was used as the electrolytic solution, and an initial conditioning, an initial discharge resistance evaluation test, a high temperature storage durability test, and a discharge resistance evaluation test after high temperature storage were conducted.

### [Comparative Example 1-2]

A non-aqueous electrolytic solution of Comparative Example 1-2 was prepared in the same manner as in Example 1-1, except that Compound 1 were not added in the electrolytic solution of Example 1-1. A lithium secondary battery was prepared in the same manner as in Example 1-1, except that the non-aqueous electrolytic solution of Comparative Example 1-2 was used as the electrolytic solution, and an initial conditioning, an initial discharge resistance evaluation test, a high temperature storage durability test, and a discharge resistance evaluation test after high temperature storage were conducted.

### [Comparative Example 1-3]

A non-aqueous electrolytic solution of Comparative Example 1-3 was prepared in the same manner as in Example 1-2, except that Compound 1 were not added in the electrolytic solution of Example 1-2. A lithium secondary battery was prepared in the same manner as in Example 1-2, except that the non-aqueous electrolytic solution of Comparative Example 1-3 was used as the electrolytic solution, and an initial conditioning, an initial discharge resistance evaluation test, a high temperature storage durability test, and a discharge resistance evaluation test after high temperature storage were conducted.

### [Comparative Example 1-4]

A non-aqueous electrolytic solution of Comparative Example 1-4 was prepared in the same manner as in Example 1-3, except that Compound 1 were not added in the electrolytic solution of Example 1-3. A lithium secondary battery was prepared in the same manner as in Example 1-3, except that the non-aqueous electrolytic solution of Comparative Example 1-4 was used as the electrolytic solution, and an initial conditioning, an initial discharge resistance evaluation test, a high temperature storage durability test, and a discharge resistance evaluation test after high temperature storage were conducted.

### [Comparative Example 1-5]

A non-aqueous electrolytic solution of Comparative Example 1-5 was prepared in the same manner as in Example 1-1, except that lithium fluorosulfonate were not added in the electrolytic solution of Example 1-1. A lithium secondary battery was prepared in the same manner as in Example 1-1, except that the non-aqueous electrolytic solution of Comparative Example 1-5 was used as the electrolytic solution, and an initial conditioning, an initial discharge resistance evaluation test, a high temperature storage durability test, and a discharge resistance evaluation test after high temperature storage were conducted.

### [Comparative Example 1-6]

A non-aqueous electrolytic solution of Comparative Example 1-6 was prepared in the same manner as in Example 1-1, except that the content of lithium fluorosulfonate was changed as shown in Table 1 in the electrolytic solution of Example 1-1. A lithium secondary battery was prepared in the same manner as in Example 1-1, except that the non-aqueous electrolytic solution of Comparative Example 1-6 was used as the electrolytic solution, and an initial conditioning, an initial discharge resistance evaluation test, a high temperature storage durability test, and a discharge resistance evaluation test after high temperature storage were conducted.

### [Comparative Example 1-7]

A non-aqueous electrolytic solution of Comparative Example 1-7 was prepared in the same manner as in Example 1-3, except that Compound 2, a cyclic sulfonate ester, was used instead of Compound 1, a chain sulfonate ester in the electrolytic solution of Example 1-3. A lithium secondary battery was prepared in the same manner as in Example 1-3, except that the non-aqueous electrolytic solution of Comparative Example 1-7 was used as the electrolytic solution, and an initial conditioning, an initial discharge resistance evaluation test, a high temperature storage durability test, and a discharge resistance evaluation test after high temperature storage were conducted.

### [Table 1]

**Table 1**

| | Additive | | | | LiPF₆ content (%by mass) | VC content (%by mass) | Normal temperature discharge resistance increase rate (%) | Low temperature discharge resistance increase rate (%) |
|---|---|---|---|---|---|---|---|---|
| | Sulfonate ester | Content (%by mass) | LiFSO₃ content (%by mass) | Mass ratio | | | | |
| Example 1-1 | Compound 1 | 1.0 | 0.002 | 99.80/0.20 | 13.9 | 1.0 | 97.14 | 86.37 |
| Example 1-2 | | | 0.2 | 83.33/16.67 | 13.9 | | 94.11 | 88.12 |
| Example 1-3 | | | 1.0 | 50/50 | 13.8 | | 94.12 | 92.34 |
| Example 1-4 | | | 6.0 | 14.3/85.7 | 13.1 | | 97.67 | 92.28 |
| Example 1-5 | | 5.0 | 1.0 | 83.33/16.67 | 13.2 | | 99.23 | 93.65 |
| Comparative Example 1-1 | None | - | - | - | 14.1 | | 100.00 | 100.00 |
| Comparative Example 1-2 | | | 0.002 | | 14.1 | | 100.96 | 107.14 |
| Comparative Example 1-3 | | | 0.2 | | 14.0 | | 100.38 | 105.87 |
| Comparative Example 1-4 | | | 1.0 | | 13.9 | | 95.15 | 101.83 |
| Comparative Example 1-5 | Compound 1 | 1.0 | - | 100/0 | 13.9 | | 100.55 | 97.61 |
| Comparative Example 1-6 | | | 8.0 | 11.11/88.89 | 12.8 | | 107.70 | 147.10 |
| Comparative Example 1-7 | Compound 2 | 1.0 | 1.0 | 50/50 | 13.8 | | 100.10 | 103.00 |

### < Examples 2-1 to 2-2, Comparative Examples 2-1 to 2-3 >

In Example 1-1, lithium fluorosulfonate was changed to lithium bis(fluorosulfonyl)imide (LiFSI), and an electrolytic solution was prepared in such a manner that the content was as shown in Table 2 below. A lithium secondary battery was prepared in the same manner as in Example 1-1, except that the obtained electrolytic solution was used, and the above-described initial conditioning, an initial discharge resistance evaluation test, a high temperature storage durability test, and a discharge resistance evaluation test after high temperature storage were conducted. The evaluation results are shown in Table 2 as relative values when Comparative Example 2-1 is set at 100.00%. In Table 2, "mass ratio" indicates the mass ratio of the content of sulfonate ester (Compound 1 or Compound 2) to the content of lithium bis(fluorosulfonyl)imide, expressed as a ratio with the total content of lithium bis(fluorosulfonyl)imide and sulfonate ester (Compound 1 or Compound 2) as 100.

### [Table 2]

**Table 2**

| | Additive | | | | LiPF₆ content (% by mass) | VC content (% by mass) | Normal temperature discharge resistance increase rate (%) | Low temperature discharge resistance increase rate (%) |
|---|---|---|---|---|---|---|---|---|
| | Sulfonate ester | Content (% by mass) | LiFSI content (% by mass) | Mass ratio | | | | |
| Example 2-1 | Compound 1 | 1.0 | 1.0 | 50/50 | 13.8 | 1.0 | 98.17 | 92.99 |
| Example 2-2 | | 1.0 | 6.0 | 14.3/85.7 | 13.1 | | 94.15 | 91.71 |
| Comparative Example 2-1 | None | - | - | - | 14.1 | | 100.00 | 100.00 |
| Comparative Example 2-2 | Compound 1 | 1.0 | 8.0 | 11.11/88.89 | 12.8 | | 101.30 | 115.80 |
| Comparative Example 2-3 | Compound 2 | 1.0 | 1.0 | 50/50 | 13.8 | | 100.42 | 100.36 |

### < Examples 3-1 to 3-6, Comparative Examples 3-1 to 3-4 >

In Example 1-1, a lithium fluorosulfonate salt was changed to lithium bis(oxalato)borate (LiBOB), and an electrolytic solution was prepared in such a manner that the content was as shown in Table 3 below. A lithium secondary battery was prepared in the same manner as in Example 1-1, except that the obtained electrolytic solution was used, and the above-described initial conditioning, an initial discharge resistance evaluation test, a high temperature storage durability test, and a discharge resistance evaluation test after high temperature storage were conducted. The evaluation results are shown in Table 3 as relative values when Comparative Example 3-1 is set at 100.00%. In Table 3, "mass ratio" indicates the mass ratio of the content of sulfonate ester (Compound 1 or Compound 2) to the content of lithium bis(oxalato)borate, expressed as a ratio with the total content of lithium bis(oxalato)borate and sulfonate ester (Compound 1 or Compound 2) as 100.

### [Table 3]

**Table 3**

| | Additive | | | | LiPF₆ content (% by mass) | VC content (% by mass) | Normal temperature discharge resistance increase rate (%) | Low temperature discharge resistance increase rate (%) |
|---|---|---|---|---|---|---|---|---|
| | Sulfonate ester | Content (% by mass) | LiBOB content (% by mass) | Mass ratio | | | | |
| Example 3-1 | Compound 1 | 0.4 | 1.0 | 28.6/71.4 | 13.9 | 1.0 | 88.15 | 88.09 |
| Example 3-2 | | 1.0 | 1.0 | 50/50 | 13.8 | | 90.30 | 84.74 |
| Example 3-3 | | | 6.0 | 14.3/85.7 | 13.1 | | 99.63 | 92.56 |
| Example 3-4 | | 3.0 | 0.5 | 85.7/14.3 | 13.6 | | 96.48 | 82.97 |
| Example 3-5 | | | 1.0 | 75.0/25.0 | 13.5 | | 92.25 | 78.98 |
| Example 3-6 | | 5.0 | 1.0 | 83.33/16.67 | 13.2 | | 97.73 | 85.15 |
| Comparative Example 3-1 | None | - | - | - | 14.1 | | 100.00 | 100.00 |
| Comparative Example 3-2 | Compound 2 | 1.0 | 1.0 | 50/50 | 13.8 | | 93.33 | 93.36 |
| Comparative Example 3-3 | | 3.0 | 0.5 | 85.7/14.3 | 13.6 | | 100.25 | 104.42 |
| Comparative Example 3-4 | | 3.0 | 1.0 | 75.0/25.0 | 13.5 | | 102.79 | 106.37 |

### < Examples 4-1 to 4-6, Comparative Examples 4-1 to 4-2 >

In Example 1-1, a lithium fluorosulfonate salt was changed to lithium difluorophosphate (LiPO₂F₂) which is a difluorophosphate, and an electrolytic solution was prepared in such a manner that the content was as shown in Table 4 below. A lithium secondary battery was prepared in the same manner as in Example 1-1, except that the obtained electrolytic solution was used, and the above-described initial conditioning, an initial discharge resistance evaluation test, a high temperature storage durability test, and a discharge resistance evaluation test after high temperature storage were conducted, and evaluation results of the normal temperature discharge resistance increase rate are shown in Table 4 as relative values when Comparative Example 4-2 is set at 100.00%. In Table 4, "mass ratio" indicates the mass ratio of the content of sulfonate ester (Compound 1) to the content of lithium difluorophosphate, expressed as a ratio with the total content of lithium difluorophosphate and sulfonate ester (Compound 1) as 100.

### [Table 4]

**Table 4**

| | Additive | | | | LiPF₆ content (% by mass) | VC content (% by mass) | Normal temperature discharge resistance increase rate (%) |
|---|---|---|---|---|---|---|---|
| | Sulfonate ester | Content (%by mass) | LiPO₂F₂ content (% by mass) | Mass ratio | | | |
| Example 4-1 | Compound 1 | 0.4 | 1.0 | 28.6/71.4 | 13.9 | 1.0 | 96.71 |
| Example 4-2 | | 0.5 | | 33.33/66.67 | 13.8 | | 97.21 |
| Example 4-3 | | 1.0 | | 50/50 | 13.8 | | 94.94 |
| Example 4-4 | | 2.0 | | 66.67/33.33 | 13.6 | | 96.24 |
| Example 4-5 | | 3.0 | | 75/25 | 13.5 | | 96.70 |
| Example 4-6 | | 4.0 | | 80/20 | 13.3 | | 98.65 |
| Comparative Example 4-1 | | 5.0 | | 83.33/16.67 | 13.2 | | 101.27 |
| Comparative Example 4-2 | None | - | - | - | 14.1 | | 100.00 |

From Tables 1 to 3, it was found that the discharge resistance increase rates at normal temperature and low temperature of lithium secondary batteries was simultaneously suppressed when using the non-aqueous electrolytic solutions of Examples 1-1 to 1-5, 2-1 to 2-2, and 3-1 to 3-6, compared to when a chain sulfonate ester and at least one compound selected from the group consisting of a fluorosulfonate, an imide salt, and an oxalate are not contained together (Comparative Examples 1-1, 2-1, and 3-1). In the combination of a chain sulfonate ester and a fluorosulfonate ester and the combination of a chain sulfonate ester and an imide salt, those effects were found to be insufficient when the fluorosulfonate salt or the imide salt was contained in a non-aqueous electrolytic solution in an amount exceeding a predetermined amount (Comparative Examples 1-6 and 2-2).

On the other hand, even when compared with the cases containing at least one compound selected from the group consisting of a cyclic sulfonate ester and a fluorosulfonate, an imide salt, and an oxalate (Comparative Examples 1-7, 2-3, and 3-2 to 3-4), the discharge resistance increase rate of a secondary battery at normal temperature and low temperature was found to be suppressed simultaneously when the electrolytic solution containing a chain sulfonate ester at the same ratio was used.

In the case of non-aqueous electrolytic solutions containing only a fluorosulfonate (Comparative Examples 1-2 to 1-4), the discharge resistance increase rate at normal temperature and low temperature increased more than in Comparative Example 1-1, and it was indicated that the battery performance became insufficient because containing a fluorosulfonate increased the discharge resistance increase rate at normal temperature and low temperature. In the case of a non-aqueous electrolytic solution containing only a chain sulfonate ester (Comparative Example 1-5), although the discharge resistance increase rate at low temperature was suppressed, an improvement effect was small, and furthermore, the discharge resistance increase rate at normal temperature increased more than in Comparative Example 1-1, indicating that the battery performance was less satisfactory than that without a chain sulfonate ester. Therefore, it is clear that the lithium secondary battery using the non-aqueous electrolytic solution of one embodiment of the present invention has superior characteristics.

Table 4 shows that the non-aqueous electrolytic solutions of Examples 4-1 to 4-6 suppressed the discharge resistance increase rate at normal temperature of lithium secondary batteries compared to cases in which both a chain sulfonate ester and a lithium difluorophosphate were not contained (Comparative Example 4-2). When the mass ratio of the chain sulfonate ester to the difluorophosphate was relatively large, the effect was found to be insufficient (Comparative Example 4-1). Therefore, it is clear that the lithium secondary battery using a non-aqueous electrolytic solution according to one embodiment of the present invention has superior characteristics.

In Examples and Comparative Examples shown in Tables 1 to 4 above, although durability tests were conducted for a relatively short period of time as reference models, significant differences were confirmed. Since actual use of non-aqueous electrolytic solution rechargeable batteries may extend over several years, it can be understood that the differences in the results are even more pronounced assuming long-term use.

This application claims priority from Japanese Patent Application No. 2019-226955, filed on December 17, 2019, and the entire contents of which are incorporated herein by reference.

## Claims

1. A non-aqueous electrolytic solution for an energy device including a positive electrode and a negative electrode, wherein
the non-aqueous electrolytic solution contains an electrolyte and a non-aqueous solvent, and further contains
a chain sulfonate ester and at least one fluorophosphate selected from a monofluorophosphate and a difluorophosphate, and wherein the mass ratio of the content of the chain sulfonate ester to the content of the fluorophosphate is from 10/90 to 82/18.

2. A non-aqueous electrolytic solution for an energy device including a positive electrode and a negative electrode, wherein
the non-aqueous electrolytic solution contains an electrolyte and a non-aqueous solvent, and further contains
(A) a chain sulfonate ester, and at least one compound selected from the group consisting of a fluorosulfonate, an imide salt, and an oxalate, wherein
(B) the total content of the at least one compound selected from the group consisting of a fluorosulfonate, an imide salt, and an oxalate is from 1.0 × 10⁻³% by mass to 7% by mass in 100% by mass of the non-aqueous electrolytic solution, and wherein
(C) the mass ratio of the content of the at least one compound selected from the group consisting of a fluorosulfonate, an imide salt, and an oxalate to the content of the chain sulfonate ester is from 10/90 to 99.99/0.01.

3. The non-aqueous electrolytic solution according to claim 1 or 2, wherein the chain sulfonate ester is a compound represented by Formula (1). 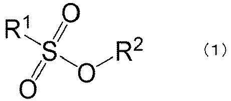 In Formula (1), R¹ represents a hydrocarbon group having from 1 to 5 carbon atoms optionally containing a substituent, and R² represents a hydrocarbon group having from 1 to 10 carbon atoms optionally containing a substituent.

4. The non-aqueous electrolytic solution according to any one of claims 1 to 3, wherein the non-aqueous electrolytic solution further contains at least one compound selected from the group consisting of a cyclic carbonate having a carbon-carbon unsaturated bond and a fluorine-containing cyclic carbonate.

5. An energy device comprising a negative electrode, a positive electrode, and a non-aqueous electrolytic solution according to any one of claims 1 to 4.

6. The energy device according to claim 5, wherein the positive electrode contains a positive electrode active material, and the positive electrode active material is a lithium transition metal composite oxide represented by Composition Formula (14).
Liₐ₁Ni_{b1}Co_{c1}M_{d1}O₂ ··· (14)
In Formula (14), a1, b1, c1, and d1 are numbers satisfying 0.90 ≤ a1 ≤ 1.10, 0.50 ≤ b1 ≤ 0.98, 0.01 ≤ c1 < 0.50, and 0.01 ≤ d1 < 0.50, respectively, and b1 + c1 + d1 = 1 is satisfied. M represents at least one element selected from the group consisting of Mn, Al, Mg, Zr, Fe, Ti, and Er.
